(19) Europäisches Patentamt
European Patent Office
Office européen des brevets

(11) EP 4 234 602 A1

(12) EUROPÄISCHE PATENTANMELDUNG

(43) Veröffentlichungstag:
**30.08.2023 Patentblatt 2023/35**

(21) Anmeldenummer: **22159155.5**

(22) Anmeldetag: **28.02.2022**

(51) Internationale Patentklassifikation (IPC):
***C08G 18/24*** *(2006.01)* ***C08G 18/28*** *(2006.01)*
***C08G 18/79*** *(2006.01)*

(52) Gemeinsame Patentklassifikation (CPC):
**C08G 18/792; C08G 18/246; C08G 18/283**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **RICHTER, Frank**
**51373 Leverkusen (DE)**
- **SIEGEMUND, Sven**
**51399 Burscheid (DE)**

(74) Vertreter: **Levpat**
**c/o Covestro AG**
**Gebäude K12**
**51365 Leverkusen (DE)**

# (54) VERWENDUNG SPEZIELLER KATALYSATOREN FÜR DIE HERSTELLUNG VON POLYURETHANBESCHICHTUNGEN

(57) Die vorliegende Erfindung betrifft eine Verbindung zur Verwendung als Katalysator bei der Herstellung von Polyisocyanat-Polyadditionsprodukten, deren Herstellung und deren Verwendung als Katalysator, vorzugsweise als thermolatenter Katalysator, zur Herstellung von Polyisocyanat-Polyadditionsprodukten. Des Weiteren betrifft die Erfindung eine Formulierung sowie ein Verfahren zur Herstellung von Polyisocyanat-Polyadditionsprodukten jeweils unter Verwendung der erfindungsgemäßen Verbindung sowie ein Polyisocyanat-Polyadditionsprodukt, erhalten oder erhältlich durch dieses Verfahren. Schließlich betrifft die Erfindung ein Beschichtungsmittel zur Beschichtung eines Substrates, welches das erfindungsgemäße Polyisocyanat-Polyadditionsprodukt umfasst oder daraus besteht.

EP 4 234 602 A1

## Beschreibung

Die vorliegende Erfindung betrifft eine Verbindung zur Verwendung als Katalysator bei der Herstellung von Polyisocyanat-Polyadditionsprodukten, deren Herstellung und deren Verwendung als Katalysator, vorzugsweise als thermolatenter Katalysator, zur Herstellung von Polyisocyanat-Polyadditionsprodukten. Des Weiteren betrifft die Erfindung eine Formulierung sowie ein Verfahren zur Herstellung von Polyisocyanat-Polyadditionsprodukten jeweils unter Verwendung der erfindungsgemäßen Verbindung sowie ein Polyisocyanat-Polyadditionsprodukt, erhalten oder erhältlich durch dieses Verfahren. Schließlich betrifft die Erfindung ein Beschichtungsmittel zur Beschichtung eines Substrates, welches das erfindungsgemäße Polyisocyanat-Polyadditionsprodukt umfasst oder daraus besteht.

## Stand der Technik

Polyurethanbeschichtungen sind seit langem bekannt und werden in vielen Bereichen eingesetzt. Sie werden in der Regel aus einer Polyisocyanat- und einer Hydroxylkomponente durch Vermischen unmittelbar vor der Applikation hergestellt (2-Komponenten-(2K)-Technologie). Für lichtechte Beschichtungen werden in der Regel Polyisocyanatkomponenten auf Basis aliphatischer Polyisocyanate eingesetzt, die im Vergleich zu Produkten mit aromatisch gebundenen Isocyanatgruppen deutlich langsamer mit der Hydroxylkomponente in Reaktion treten. In den meisten Fällen muss daher die Reaktion katalysiert werden. Zusätzlich wird falls möglich zur weiteren Beschleunigung der Reaktion erwärmt. Als Katalysatoren haben sich dabei organische Zinnverbindungen, insbes. Dibutylzinndilaurat (DBTL), bewährt. Diese haben den generellen Nachteil eines ungünstigen ökologischen Profils, was u. a. bereits dazu geführt hat, die Stoffklasse der Organozinnverbindungen aus Schiffsanstrichstoffen, denen sie als Biozid beigemengt wurden, vollständig zu verbannen.

Ein genereller Nachteil der 2K-Technologie ist es, dass die Reaktion der NCO- mit den OH-Gruppen bereits bei Zimmertemperatur langsam abläuft, was dazu führt, dass für die Verarbeitung der fertig formulierten Mischung eines derartigen 2K-Systems nur ein zeitlich enges Verarbeitungsfenster zur Verfügung steht, so genannte Topfzeit, welches durch die Anwesenheit des Katalysators weiter verkürzt wird.

Es hat deshalb nicht an Versuchen gefehlt, Katalysatoren zu entwickeln, die die Vernetzungsreaktion bei der Herstellung der 2K-Mischung kaum, nach Applikation dieser aber deutlich beschleunigen, so genannte latente Katalysatoren.

Eine besonders aussichtsreiche Technologie ist die thermolatente Katalyse (TLK) unter Verwendung von anorganischen Zinnverbindungen, wie sie beispielsweise in der WO 2011/051247 A1 beschrieben ist. Ein Nachteil der im Stand der Technik genannten TLK-Systeme ist der recht hohe Katalysatorbedarf und die mitunter unbefriedigende Stabilität der Polyisocyanathärter, beispielsweise bezüglich Vergilbung und/oder Viskositätsanstieg meist einhergehend mit einem Abfall des Isocyanatgehaltes (NCO-Abfall).

Dieser Effekt tritt insbesondere bei Iminooxadiazindiongruppen enthaltenden Polyisocyanaten auf, beispielsweise zugänglich nach der Lehre der EP 798 299 B1, EP 3 337 836 A1 oder EP 3 107 948 A1, so dass es bisher praktisch unmöglich war, diese Substanzklasse mit thermolatenten Katalysatoren auszurüsten.

## Aufgabe der Erfindung

Aufgabe der vorliegenden Erfindung war es daher, eine Verbindung zur Verwendung als Katalysator bei der Herstellung von Polyisocyanat-Polyadditionsprodukten bereitzustellen. Im Besonderen sollte die Verbindung, bei ansonsten unverändertem oder sogar verbessertem Eigenschaftsprofil, eine lange Topfzeit und ausreichende Härte der erzeugten Produkte sowie eine geringerere Katalysatorbeladung beziehungsweise bei identischer Katalysatorbeladung eine höhere Reaktivität ermöglichen. Außerdem sollte die Verbindung eine Vergilbungsneigung und/oder Viskositätsanstieg/NCO-Abfall der Produkte mindestens auf dem Niveau der bestehenden Systeme des Standes der Technik ermöglichen. Die Topfzeit ist die Zeit, innerhalb der sich die Viskosität der fertig formulierten Lackrezeptur unakzeptabel stark erhöht hat. Sie wird beispielsweise indirekt bestimmt über die Verdoppelung der Auslaufzeit der fertig formulierten Lackrezeptur im DIN 4 Becher. Diese verbesserten Katalysator-Systeme sollten möglichst ebenfalls frei von toxischen Inhaltsstoffen wie beispielsweise Cadmium, Quecksilber, Blei und/oder Organozinnverbindungen, und ausgehend von wohlfeilen, technisch problemlos zugänglichen Edukten herstellbar sein. Als Organozinnverbindungen werden definitionsgemäß Spezies mit mindestens einer Sn-C-Bindung im Molekül verstanden.

## Lösung der Aufgabe

Diese Aufgaben wurden überraschenderweise gelöst durch eine Verbindung mit der allgemeinen Formel (I) oder (II) zur Verwendung als Katalysator bei der Herstellung von Polyisocyanat-Polyadditionsprodukten,,

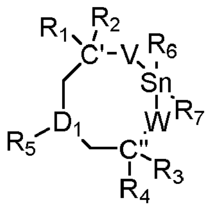

(I)

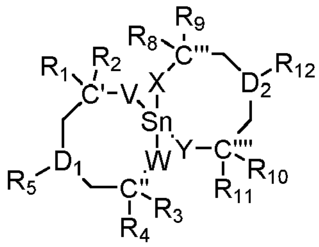

(II)

wobei

$R_1$, $R_2$, $R_3$, $R_4$, $R_8$, $R_9$, $R_{10}$ und $R_{11}$ unabhängig voneinander für Wasserstoff oder für, gegebenenfalls substituierte und/oder Heteroatom-aufweisende, aliphatische, (cyclo)aliphatische oder aromatische Reste;

$R_5$ und $R_{12}$ unabhängig voneinander für, gegebenenfalls substituierte und/oder Heteroatom-aufweisende, aliphatische, (cyclo)aliphatische oder aromatische Reste;

$R_6$ und $R_7$ unabhängig voneinander für -OH, -SH, $-OR_{13}$, Halogene, $-OC(=O)R_{14}$, $-SR_{15}$, - $OC(=S)R_{16}$, $-OS(=O)_2OR_{17}$, $-OS(=O)_2R_{18}$ oder $-NR_{19}R_{20}$, wobei $R_{13}$ bis $R_{20}$ unabhängig voneinander für, gegebenenfalls substituierte und/oder Heteroatom-aufweisende, aliphatische, (cyclo)aliphatische oder aromatische Reste stehen;

V, W, X und Y unabhängig voneinander für Sauerstoff, Schwefel, -OC(=O)-, -OC(=S)-, - SC(=O)-, -SC(=S)-, $-OS(=O)_O-$, $-OS(=O)_2-$ oder $-N(R_{21})-$, wobei $R_{21}$ für, gegebenenfalls substituierte und/oder Heteroatom-aufweisende, aliphatische, (cyclo)aliphatische oder aromatische Reste steht;

$D_1$ und $D_2$ unabhängig voneinander für Sauerstoff-, Schwefel- oder Stickstoff;

steht, dadurch gekennzeichnet, dass in Formel (I) mindestens einer der Reste $R_1$, $R_2$, $R_3$ oder $R_4$ Wasserstoff und mindestens einer dieser Reste kein Wasserstoff ist, wobei die Kohlenstoffatome C’ und C" nicht dieselben Reste tragen und in Formel (II) mindestens einer der Reste $R_1$, $R_2$, $R_3$, $R_4$, $R_8$, $R_9$, $R_{10}$ oder $R_{11}$ ein Wasserstoff und mindestens einer dieser Reste kein Wasserstoff ist, wobei die Kohlenstoffatome C’ und C" und/oder C’" und C"" nicht dieselben Reste tragen.

Des Weiteren betrifft die Erfindung ein Verfahren zur Herstellung der erfindungsgemäßen Verbindung mit der allgemeinen Formel (I) durch Umsetzung entweder

- einer Zinn-enthaltenden Verbindung des Typs $R_6R_7SnZ_2$; mit
- einer Verbindung der allgemeinen Formel (III);

$$HV-C'(R_1;R_2)-CH_2-D_1(R_5)-CH_2-C''(R_3;R_4)-WH \qquad (III)$$

oder

- einer Zinn-enthaltenden Verbindung des Typs $SnZ_4$; mit
- einer Verbindung der allgemeinen Formel (III); und

$$HV-C'(R_1;R_2)-CH_2-D_1(R_5)-CH_2-C''(R_3;R_4)-WH \qquad (III)$$

- anschließend mit Verbindungen der allgemeinen Formeln (IV) und (V);

$$R_6\text{-A (IV) } R_7\text{-A} \qquad (V)$$

wobei

$R_1$, $R_2$, $R_3$, $R_4$ unabhängig voneinander für Wasserstoff oder für, gegebenenfalls substituierte und/oder Heteroatom-aufweisende, aliphatische, (cyclo)aliphatische oder aromatische Reste;

$R_5$ unabhängig voneinander für, gegebenenfalls substituierte und/oder Heteroatom-aufweisende, aliphatische, (cyclo)aliphatische oder aromatische Reste stehen.

$R_6$ und $R_7$ unabhängig voneinander für -OH, -SH, -$OR_{13}$, Halogene, -OC(=O)$R_{14}$, -$SR_{15}$, - OC(=S)$R_{16}$, -OS(=O)$_2$O$R_{17}$, -OS(=O)$_2$$R_{18}$ oder -N$R_{19}$$R_{20}$, wobei $R_{13}$ bis $R_{20}$ unabhängig voneinander für, gegebenenfalls substituierte und/oder Heteroatom-aufweisende, aliphatische, (cyclo)aliphatische oder aromatische Reste stehen;

V, und W unabhängig voneinander für Sauerstoff, Schwefel, -OC(=O)-, -OC(=S)-, -SC(=O)-, -SC(=S)-, -OS(=O)$_O$-, -OS(=O)$_2$- oder -N($R_{21}$)-, wobei $R_{21}$ für, gegebenenfalls substituierte und/oder Heteroatom-aufweisende, aliphatische, (cyclo)aliphatische oder aromatische Reste steht;

$D_1$ für Sauerstoff-, Schwefel- oder Stickstoff;

A für Abgangsgruppen, bevorzugt -OH, -SH, N($R_{22}$)H- oder Halogene, wobei $R_{22}$ für, gegebenenfalls substituierte und/oder Heteroatom-aufweisende, aliphatische, (cyclo)aliphatische oder aromatische Reste steht;

Z für Halogene, Alkoxide oder Mischungen davon;

steht, dadurch gekennzeichnet, dass mindestens einer der Reste $R_1$, $R_2$, $R_3$ oder $R_4$ ein Wasserstoff und mindestens einer dieser Reste kein Wasserstoff ist, wobei die Kohlenstoffatome C' und C" nicht dieselben Reste tragen.

Außerdem betrifft die Erfindung Verfahren zur Herstellung der erfindungsgemäßen Verbindung mit der allgemeinen Formel (II) durch Umsetzung von elementaren Zinn oder einer Zinn-enthaltenden Verbindung mit

- einer Verbindung mit der allgemeinen Formel (III); und

$$HV\text{-}C'(R_1;R_2)\text{-}CH_2\text{-}D_1(R_5)\text{-}CH_2\text{-}C''(R_3;R_4)\text{-}WH \qquad (III)$$

- einer Verbindung mit der allgemeinen Formel (IV);

$$HX\text{-}C'''(R_8;R_9)\text{-}CH_2\text{-}D_2(R_{12})\text{-}CH_2\text{-}C''''(R_{10}:R_{11})\text{-}YH \qquad (VI);$$

wobei

$R_1$, $R_2$, $R_3$, $R_4$, $R_8$, $R_9$, $R_{10}$ und $R_{11}$ unabhängig voneinander für Wasserstoff oder für, gegebenenfalls substituierte und/oder Heteroatom-aufweisende, aliphatische, (cyclo)aliphatische oder aromatische Reste;

$R_5$ und $R_{12}$ unabhängig voneinander für, gegebenenfalls substituierte und/oder Heteroatom-aufweisende, aliphatische, (cyclo)aliphatische oder aromatische Reste stehen.

V, W, X und Y unabhängig voneinander für Sauerstoff, Schwefel, -OC(=O)-, -OC(=S)-, - SC(=O)-, -SC(=S)-, -OS(=O)$_O$-, -OS(=O)$_2$- oder -N($R_{21}$)-, wobei $R_{21}$ für, gegebenenfalls substituierte und/oder Heteroatom-aufweisende, aliphatische, (cyclo)aliphatische oder aromatische Reste steht;

$D_1$ und $D_2$ unabhängig voneinander für Sauerstoff-, Schwefel- oder Stickstoff;

steht, dadurch gekennzeichnet, dass mindestens einer der Reste $R_1$, $R_2$, $R_3$, $R_4$, $R_8$, $R_9$, $R_{10}$ oder $R_{11}$ ein Wasserstoff und mindestens einer dieser Reste kein Wasserstoff ist, wobei die Kohlenstoffatome C′ und C″ und/oder C‴ und C⁗ nicht dieselben Reste tragen.

Die Verbindung betrifft ferner die Verwendung einer erfindungsgemäßen Verbindung als Katalysator, vorzugsweise als thermolatenter Katalysator zur Herstellung von Polyisocyanat-Polyadditionsprodukten, insbesondere Polyurethanen, bevorzugt Polyurethan-Schaumstoffen, Polyurethan-Beschichtungen, Polyurethan-Lacken oder Polyurethan-Klebstoffen.

Darüber hinaus betrifft die Erfindung eine Formulierung zur Herstellung von Polyisocyanat-Polyadditionsprodukten, umfassend oder bestehend aus den folgenden Komponenten:

a) mindestens ein, gegebenenfalls substituiertes und/oder Heteroatom-aufweisendes, aliphatisches, (cyclo)aliphatisches oder aromatisches Polyisocyanat;

b) mindestens eine erfindungsgemäße Verbindung als Katalysator;

c) gegebenenfalls weitere von b) verschiedene Katalysatoren;

d) gegebenenfalls Hilfs- und/oder Zusatzstoffe,

wobei das Verhältnis des Gewichts des Zinns aus Komponente b) und des Gewichts der Komponente a) vorzugsweise höchstens 1000 ppm beträgt, wenn die Komponente a) ein aliphatisches und/oder (cyclo)aliphatisches Polyisocyanat ist und höchstens 50 ppm beträgt, wenn die Komponente a) ein aromatisches Polyisocyanat ist.

Außerdem betrifft die Erfindung ein Verfahren zur Herstellung von Polyisocyanat-Polyadditionsprodukten durch Umsetzung einer Zusammensetzung:

umfassend oder bestehend aus mindestens einer Formulierung nach Anspruch 16 und mindestens einer NCO reaktiven Verbindung, wobei die Umsetzung bevorzugt bei einer Isocyanat-Kennzahl von 80 bis 150 erfolgt;
oder
umfassend oder bestehend aus den folgenden Komponenten:

A) mindestens ein, gegebenenfalls substituiertes und/oder Heteroatom-aufweisendes, aliphatisches, (cyclo)aliphatisches oder aromatisches Polyisocyanat;
B) mindestens eine NCO reaktive Verbindung;
C) mindestens eine erfindungsgemäße Verbindung als Katalysator;
D) gegebenenfalls weitere von C) verschiedene Katalysatoren;
E) gegebenenfalls Hilfs- und/oder Zusatzstoffe,

wobei das Verhältnis des Gewichts des Zinns aus Komponente C) und des Gewichts der Komponente A) vorzugsweise höchstens 1000 ppm beträgt, wenn die Komponente A) ein aliphatisches und/oder (cyclo)aliphatisches Polyisocyanat ist und höchstens 50 ppm beträgt, wenn die Komponente A) ein aromatisches Polyisocyanat ist.

Zudem betrifft die Erfindung ein Polyisocyanat-Polyadditionsprodukt, erhalten oder erhältlich durch das vorgenannte erfindungsgemäße Verfahren.

Schließlich betrifft die Erfindung ein Beschichtungsmittel zur Beschichtung eines Substrats, umfassend oder bestehend aus mindestens einem erfindungsgemäßen Polyisocyanat-Polyadditionsprodukt, wobei das Substrat bevorzugt ein Kunststoffteil, ein Metallteil oder ein Formkörper aus Holz ist.

**<u>Die erfindungsgemäße Verbindung</u>**

Die Erfindung stellt eine Verbindung mit der allgemeinen Formel (I) oder (II) zur Verwendung als Katalysator bei der Herstellung von Polyisocyanat-Polyadditionsprodukten, zur Verfügung,

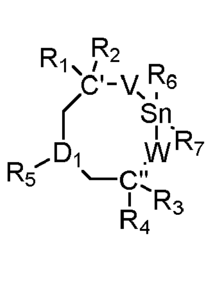

(I)

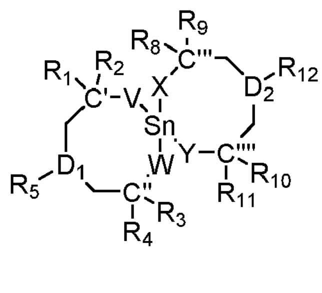

(II)

wobei

$R_1$, $R_2$, $R_3$, $R_4$, $R_8$, $R_9$, $R_{10}$ und $R_{11}$ unabhängig voneinander für Wasserstoff oder für, gegebenenfalls substituierte und/oder Heteroatom-aufweisende, aliphatische, (cyclo)aliphatische oder aromatische Reste;

$R_5$ und $R_{12}$ unabhängig voneinander für, gegebenenfalls substituierte und/oder Heteroatom-aufweisende, aliphatische, (cyclo)aliphatische oder aromatische Reste;

$R_6$ und $R_7$ unabhängig voneinander für -OH, -SH, -$OR_{13}$, Halogene, -OC(=O)$R_{14}$, -$SR_{15}$, - OC(=S)$R_{16}$, -OS(=O)$_2$O$R_{17}$, -OS(=O)$_2$$R_{18}$ oder -N$R_{19}$$R_{20}$, wobei $R_{13}$ bis $R_{20}$ unabhängig voneinander für, gegebenenfalls substituierte und/oder Heteroatom-aufweisende, aliphatische, (cyclo)aliphatische oder aromatische Reste stehen;

V, W, X und Y unabhängig voneinander für Sauerstoff, Schwefel, -OC(=O)-, -OC(=S)-, - SC(=O)-, -SC(=S)-, -OS(=O)$_O$-, -OS(=O)$_2$- oder -N($R_{21}$)-, wobei $R_{21}$ für, gegebenenfalls substituierte und/oder Heteroatom-aufweisende, aliphatische, (cyclo)aliphatische oder aromatische Reste steht;

$D_1$ und $D_2$ unabhängig voneinander für Sauerstoff-, Schwefel- oder Stickstoff;

steht, dadurch gekennzeichnet, dass in Formel (I) mindestens einer der Reste $R_1$, $R_2$, $R_3$ oder $R_4$ Wasserstoff und mindestens einer dieser Reste kein Wasserstoff ist, wobei die Kohlenstoffatome C' und C" nicht dieselben Reste tragen und in Formel (II) mindestens einer der Reste $R_1$, $R_2$, $R_3$, $R_4$, $R_8$, $R_9$, $R_{10}$ oder $R_{11}$ ein Wasserstoff und mindestens einer dieser Reste kein Wasserstoff ist, wobei die Kohlenstoffatome C′ und C″ und/oder C‴ und C″″ nicht dieselben Reste tragen.

Vorzugsweise ist der mindestens eine Rest $R_1$, $R_2$, $R_3$ oder $R_4$ in Formel (I), der kein Wasserstoff ist und der mindestens eine Rest $R_1$, $R_2$, $R_3$, $R_4$, $R_8$, $R_9$, $R_{10}$ oder $R_{11}$ in Formel (II), der kein Wasserstoff ist, aliphatisch, bevorzugt ein Methyl-, Ethyl-, Propyl-, Butyl, Hexyl, Octyl oder Perfluoralkyl-Rest.

Ferner ist es bevorzugt, dass $R_5$ und/oder $R_{12}$ ein Methyl-, Ethyl-, Propyl-, Butyl-, Pentyl- oder Hexyl-Rest ist, weiter bevorzugt ein Methyl- oder Ethyl-Rest.

V, W, X und Y stehen bevorzugt für Sauerstoff und/oder $D_1$ und $D_2$ für Stickstoff.

Überdies ist es bevorzugt, dass $R_6$ und $R_7$ identisch sind.

In einer bevorzugten Ausführungsform ist die erfindungsgemäße Verbindung ausgewählt aus der Gruppe, umfassend oder bestehend aus

- 2,2-dichloro-4,6-dimethyl-1,3,6,2-dioxazastannocan, 2,2-dibromo-4,6-dimethyl-1,3,6,2-dioxazastannocan, 2,2-dimethoxy-4,6-dimethyl-1,3,6,2-dioxazastannocan, 4,6-dimethyl-1,3,6,2-dioxazastannocan-2,2-diyl dibenzoat, 6-ethyl-4-methyl-1,3,6,2-dioxazastannocan-2,2-diyl dibenzoat, 6-butyl-4-methyl-1,3,6,2-dioxazastannocan-2,2-diyl dibenzoat, 2,4,12-trimethyl-1,7,9,15-tetraoxa-4,12-diaza-8-stannaspiro[7.7]pentadekan, 2,2,4,12-tetramethyl-1,7,9,15-tetraoxa-4,12-diaza-8-stannaspiro[7.7]pentadekan, 2,4,10,12-tetramethyl-1,7,9,15-tetraoxa-4,12-diaza-8-stannaspiro[7.7]pentadekan, 2,2,4,10,12-pentamethyl-1,7,9,15-tetraoxa-4,12-diaza-8-stannaspiro[7.7]pentadekan, 2,2,4,10,10,12-hexamethyl-1,7,9,15-tetraoxa-4,12-diaza-8-stannaspiro[7.7]pentadekan, 2,2,4,6,10,10,12-heptamethyl-1,7,9,15-tetraoxa-4,12-diaza-8-stannaspiro[7.7]pentadekan, 2,2,4,6,6,10,10,12-octamethyl-1,7,9,15-tetraoxa-4,12-diaza-8-stannaspiro[7.7]pentadekan, 2,2,4,6,6,10,10,12,14-nonamethyl-1,7,9,15-tetraoxa-4,12-diaza-8-stannaspiro[7.7]pentadekan, 4,12-diethyl-2-methyl-1,7,9,15-tetraoxa-4,12-diaza-8-stannaspiro[7.7]pentadekan, 4,12-diethyl-2,2-dimethyl-1,7,9,15-tetraoxa-4,12-diaza-8-stannaspiro[7.7]pentadekan, 4,12-diethyl-2,10-dimethyl-1,7,9,15-tetraoxa-4,12-diaza-8-stannaspiro[7.7]pentadekan, 4,12-diethyl-2,2,10-trimethyl-1,7,9,15-tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-diethyl-2,2,6,10,10-pentamethyl-1,7,9,15 -tetraoxa-4,12-diaza-8-stannaspiro[7.7] pentadekan, 4,12-diethyl-2,2,6,6,10,10-hexamethyl-1,7,9,15-tetraoxa-4,12-diaza-8-stannaspiro[7.7]pentadekan, 4,12-diethyl-2,2,6,6,10,10,14-heptamethyl-1,7,9,15-tetraoxa-4,12-diaza-8-stannaspiro[7.7]pentadekan, 4,12-dibutyl-2-methyl-1,7,9,15-tetraoxa-4,12-diaza-8-stannaspiro[7.7]pentadekan, 4,12-dibutyl-2,2-dimethyl-1,7,9,15-tetraoxa-4,12-diaza-8-stannaspiro[7.7]pentadekan, 4,12-dibutyl-2,10-dimethyl-1,7,9,15-tetraoxa-4,12-diaza-8-stannaspiro[7.7]pentadekan, 4,12-dibutyl-2,2,10-trimethyl-1,7,9,15-tetraoxa-4,12-diaza-8-stannaspiro[7.7]pentadekan, 4,12-dibutyl-2,2,10,10-tetramethyl-1,7,9,15 -tetraoxa-4,12-diaza-8-stannaspiro[7.7]pentadekan, 4,12-dibutyl-2,2,6,10,10-pentamethyl-1,7,9,15-tetraoxa-4,12-diaza-8-stannaspiro[7.7]pentadekan, 4,12-dibutyl-2,2,6,6,10,10-hexamethyl-1,7,9,15-tetraoxa-4,12-diaza-8-stannaspiro[7.7]pentadekan, 4,12-dibutyl-2,2,6,6,10,10,14-heptainethyl-1,7,9,15-tetraoxa-4,12-diaza-8-stannaspiro[7.7]pentadekan,4,12-dibutyl-2-(trifluoromethyl)-1,7,9,15-tetraoxa-4,12-diaza-8-stannaspiro[7.7]pentadekan, 4,12-dibutyl-2,10-bis(trifluoromethyl)-1,7,9,15-tetraoxa-4,12-diaza-8-stannaspiro[7.7]pentadekan oder Mischungen davon,
- bevorzugt 2,4,12-trimethyl-1,7,9,15-tetraoxa-4,12-diaza-8-stannaspiro[7.7]pentadekan, 2,2,4,12-tetramethyl-1,7,9,15-tetraoxa-4,12-diaza-8-stannaspiro[7.7]pentadekan, 2,4,10,12-tetramethyl-1,7,9,15-tetraoxa-4,12-diaza-8-stannaspiro[7.7]pentadekan, 2,2,4,10,12-pentamethyl-1,7,9,15-tetraoxa-4,12-diaza-8-stannaspiro[7.7]pentadekan, 2,2,4,10,10,12-hexamethyl-1,7,9,15-tetraoxa-4,12-diaza-8-stannaspiro[7.7]pentadekan, 2,2,4,6,10,10,12-heptamethyl-1,7,9,15-tetraoxa-4,12-diaza-8-stannaspiro[7.7]pentadekan, 2,2,4,6,6,10,10,12-octamethyl-1,7,9,15-

tetraoxa-4,12-diaza-8-stannaspiro[7.7]pentadekan, 2,2,4,6,6,10,10,12,14-nonamethyl-1,7,9,15-tetraoxa-4,12-diaza-8-stannaspiro[7.7]pentadekan, 4,12-diethyl-2-methyl-1,7,9,15-tetraoxa-4,12-diaza-8-stannaspiro[7.7]pentadekan, 4,12-diethyl-2,2-dimethyl-1,7,9,15-tetraoxa-4,12-diaza-8-stannaspiro[7.7]pentadekan, 4,12-diethyl-2,10-dimethyl-1,7,9,15-tetraoxa-4,12-diaza-8-stannaspiro[7.7]pentadekan, 4,12-diethyl-2,2,10-trimethyl-1,7,9,15 -tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-diethyl-2,2,6,10,10-pentamethyl-1,7,9,15-tetraoxa-4,12-diaza-8-stannaspiro[7.7] pentadekan, 4,12-diethyl-2,2,6,6,10,10-hexamethyl-1,7,9,15-tetraoxa-4,12-diaza-8-stannaspiro[7.7]pentadekan, 4,12-diethyl-2,2,6,6,10,10,14-heptamethyl-1,7,9,15-tetraoxa-4,12-diaza-8-stannaspiro[7.7]pentadekan, 4,12-dibutyl-2-methyl-1,7,9,15-tetraoxa-4,12-diaza-8-stannaspiro[7.7]pentadekan, 4,12-dibutyl-2,2-dimethyl-1,7,9,15-tetraoxa-4,12-diaza-8-stannaspiro[7.7]pentadekan, 4,12-dibutyl-2,10-dimethyl-1,7,9,15-tetraoxa-4,12-diaza-8-stannaspiro[7.7]pentadekan, 4,12-dibutyl-2,2,10-trimethyl-1,7,9,15-tetraoxa-4,12-diaza-8-stannaspiro[7.7]pentadekan, 4,12-dibutyl-2,2,10,10-tetramethyl-1,7,9,15-tetraoxa-4,12-diaza-8-stannaspiro[7.7]pentadekan, 4,12-dibutyl-2,2,6,10,10-pentamethyl-1,7,9,15-tetraoxa-4,12-diaza-8-stannaspiro[7.7]pentadekan, 4,12-dibutyl-2,2,6,6,10,10-hexamethyl-1,7,9,15-tetraoxa-4,12-diaza-8-stannaspiro[7.7]pentadekan, 4,12-dibutyl-2,2,6,6,10,10,14-heptamethyl-1,7,9,15 -tetraoxa-4,12-diaza-8-stannaspiro[7.7]pentadekan oder Mischungen davon,

- besonders bevorzugt 2,2,4,10,10,12-hexamethyl-1,7,9,15-tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-dibutyl-2,2,10,10-tetramethyl-1,7,9,15-tetraoxa-4,12-diaza-8-stannaspiro[7.7]pentadekan oder Mischungen davon.

Die erfindungsgemäße Verbindung kann insbesondere als Katalysator, besonders bevorzugt als thermolatenter Katalysator zur Herstellung von Polyisocyanat-Polyadditionsprodukten, insbesondere Polyurethanen, bevorzugt Polyurethan-Schaumstoffen, Polyurethan-Beschichtungen, Polyurethan-Lacken oder Polyurethan-Klebstoffen eingesetzt werden. Als thermolatenter Katalysator entwickelte die erfindungsgemäße Verbindung seine Aktivität bevorzugt durch Erhöhung der Temperatur, beispielsweise auf 60 bis 100 °C.

**Verfahren zur Herstellung der erfindungsgemäßen Verbindungen**

Verbindungen mit der allgemeinen Formel (I):

Die erfindungsgemäße Verbindung mit der allgemeinen Formel (I) kann durch Umsetzung entweder

- einer Zinn-enthaltenden Verbindung des Typs $R_6R_7SnZ_2$; mit
- einer Verbindung der allgemeinen Formel (III);

$$HV\text{-}C'(R_1;R_2)\text{-}CH_2\text{-}D_1(R_5)\text{-}CH_2\text{-}C''(R_3;R_4)\text{-}WH \qquad (III)$$

oder

- einer Zinn-enthaltenden Verbindung des Typs $SnZ_4$; mit
- einer Verbindung der allgemeinen Formel (III); und

$$HV\text{-}C'(R_1;R_2)\text{-}CH_2\text{-}D_1(R_5)\text{-}CH_2\text{-}C''(R_3;R_4)\text{-}WH \qquad (III)$$

- anschließend mit Verbindungen der allgemeinen Formeln (IV) und (V);

$$R_6\text{-}A \ (IV) \ R_7\text{-}A \qquad (V)$$

hergestellt werden, wobei

$R_1$, $R_2$, $R_3$, $R_4$ unabhängig voneinander für Wasserstoff oder für, gegebenenfalls substituierte und/oder Heteroatom-aufweisende, aliphatische, (cyclo)aliphatische oder aromatische Reste;

$R_5$ unabhängig voneinander für, gegebenenfalls substituierte und/oder Heteroatom-aufweisende, aliphatische, (cyclo)aliphatische oder aromatische Reste stehen.

$R_6$ und $R_7$ unabhängig voneinander für -OH, -SH, -$OR_{13}$, Halogene, -$OC(=O)R_{14}$, -$SR_{15}$, - $OC(=S)R_{16}$,

$-OS(=O)_2OR_{17}$, $-OS(=O)_2R_{18}$ oder $-NR_{19}R_{20}$, wobei $R_{13}$ bis $R_{20}$ unabhängig voneinander für, gegebenenfalls substituierte und/oder Heteroatom-aufweisende, aliphatische, (cyclo)aliphatische oder aromatische Reste stehen;

V, und W unabhängig voneinander für Sauerstoff, Schwefel, -OC(=O)-, -OC(=S)-, -SC(=O)-, -SC(=S)-, $-OS(=O)_O-$, $-OS(=O)_2-$ oder $-N(R_{21})-$, wobei $R_{21}$ für, gegebenenfalls substituierte und/oder Heteroatom-aufweisende, aliphatische, (cyclo)aliphatische oder aromatische Reste steht;

$D_1$ für Sauerstoff-, Schwefel- oder Stickstoff;

A für Abgangsgruppen, bevorzugt -OH, -SH, $N(R_{22})H-$ oder Halogene, wobei $R_{22}$ für, gegebenenfalls substituierte und/oder Heteroatom-aufweisende, aliphatische, (cyclo)aliphatische oder aromatische Reste steht;

Z für Halogene, Alkoxide oder Mischungen davon;

steht, dadurch gekennzeichnet, dass mindestens einer der Reste $R_1$, $R_2$, $R_3$ oder $R_4$ ein Wasserstoff und mindestens einer dieser Reste kein Wasserstoff ist, wobei die Kohlenstoffatome C' und C" nicht dieselben Reste tragen.

Dabei ist es bevorzugt, dass

- die Verbindung der allgemeinen Formel (III) 2,2'-(methylazanediyl)bis(ethan-1-ol), 2,2'-(ethylazanediyl)bis(ethan-1-ol), 2,2'-(butylazanediyl)bis(ethan-1-ol), 1-((2-hydroxyethyl)(methyl)amino)propan-2-ol, 1-(ethyl(2-hydroxyethyl)amino)propan-2-ol, 1-(butyl(2-hydroxyethyl)amino)propan-2-ol, 1,1'-(methylazanediyl)bis(propan-2-ol), 1,1'-(ethylazanediyl)bis(propan-2-ol), 1,1'-(butylazanediyl)bis(propan-2-ol), 1-((2-hydroxyethyl)(methyl)amino)-2-methylpropan-2-ol, 1-(ethyl(2-hydroxyethyl)amino)-2-methylpropan-2-ol, 1-(butyl(2-hydroxyethyl)amino)-2-methylpropan-2-ol, 1-(ethyl(2-hydroxypropyl)amino)-2-methylpropan-2-ol, 1-(butyl(2-hydroxypropyl)amino)-2-methylpropan-2-ol oder Mischungen davon, vorzugsweise 1-((2-hydroxyethyl)(methyl)amino)-2-methylpropan-2-ol, 1-(ethyl(2-hydroxyethyl)amino)-2-methylpropan-2-ol, 1-(butyl(2-hydroxyethyl)amino)-2-methylpropan-2-ol oder Mischungen davon; und/oder
- die Verbindung der allgemeinen Formel (IV) und/oder der allgemeinen Formel (V) Halogen, Halogenide, Alkoxide, Carboxylate, Peroxide, Disulfide oder Mischungen davon;

umfasst oder daraus besteht.

Vorzugsweise ist die Zinn-enthaltenden Verbindung des Typs $SnZ_4$ ausgewählt aus der Gruppe, umfassend oder bestehend aus Zinntetrachlorid, Zinntetrabromid, Zinntetra-tert-alkoxid, insbesondere Zinntetra-tert-butoxid, oder Mischungen davon. Außerdem ist es bevorzugt, dass das Stoffmengenverhältnis von Zinn-enthaltender Verbindung zu der Summe der Verbindungen mit der allgemeinen Formel (III), (IV) und (V) von 1:1 bis 1:4 beträgt, bevorzugt von 1:1 bis 1:2,1.

Vorzugsweise steht Z in der Zinn-enthaltenden Verbindung des Typs $R_6R_7SnZ_2$ für Halogene, wie beispielsweise Chlor ($R_6R_7SnCl_2$).

Verbindungen mit der allgemeinen Formel (II):

Die erfindungsgemäße Verbindung mit der allgemeinen Formel (II) kann durch Umsetzung von elementaren Zinn oder einer Zinn-enthaltenden Verbindung mit

- einer Verbindung mit der allgemeinen Formel (III); und

$$HV\text{-}C'(R_1;R_2)\text{-}CH_2\text{-}D_1(R_5)\text{-}CH_2\text{-}C''(R_3;R_4)\text{-}WH \qquad (III)$$

- einer Verbindung mit der allgemeinen Formel (IV);

$$HX\text{-}C'''(R_8;R_9)\text{-}CH_2\text{-}D_2(R_{12})\text{-}CH_2\text{-}C''''(R_{10}:R_{11})\text{-}YH \qquad (VI);$$

hergestellt werden, wobei

$R_1$, $R_2$, $R_3$, $R_4$, $R_8$, $R_9$, $R_{10}$ und $R_{11}$ unabhängig voneinander für Wasserstoff oder für, gegebenenfalls substituierte und/oder Heteroatom-aufweisende, aliphatische, (cyclo)aliphatische oder aromatische Reste;

$R_5$ und $R_{12}$ unabhängig voneinander für, gegebenenfalls substituierte und/oder Heteroatom-aufweisende, aliphatische, (cyclo)aliphatische oder aromatische Reste stehen.

V, W, X und Y unabhängig voneinander für Sauerstoff, Schwefel, -OC(=O)-, -OC(=S)-, - SC(=O)-, -SC(=S)-, $-OS(=O)_O-$, $-OS(=O)_2-$ oder $-N(R_{21})-$, wobei $R_{21}$ für, gegebenenfalls substituierte und/oder Heteroatom-aufweisende, aliphatische, (cyclo)aliphatische oder aromatische Reste steht;

$D_1$ und $D_2$ unabhängig voneinander für Sauerstoff-, Schwefel- oder Stickstoff;

steht, dadurch gekennzeichnet, dass mindestens einer der Reste $R_1$, $R_2$, $R_3$, $R_4$, $R_8$, $R_9$, $R_{10}$ oder $R_{11}$ ein Wasserstoff und mindestens einer dieser Reste kein Wasserstoff ist, wobei die Kohlenstoffatome C′ und C″ und/oder C‴ und C⁗ nicht dieselben Reste tragen.

Es ist bevorzugt, dass die Verbindung der allgemeinen Formel (III) und/oder die Verbindung der allgemeinen Formel (VI) 2,2’-(methylazanediyl)bis(ethan-1-ol), 2,2’-(ethylazanediyl)bis(ethan-1-ol), 2,2’-(butylazanediyl)bis(ethan-1-ol), 1-((2-hydroxyethyl)(methyl)amino)propan-2-ol, 1-(ethyl(2-hydroxyethyl)amino)propan-2-ol, 1-(butyl(2-hydroxyethyl)amino)propan-2-ol, 1,1’-(methylazanediyl)bis(propan-2-ol), 1,1’-(ethylazanediyl)bis(propan-2-ol), 1,1’-(butylazanediyl)bis(propan-2-ol), 1-((2-hydroxyethyl)(methyl)amino)-2-methylpropan-2-ol, 1-(ethyl(2-hydroxyethyl)amino)-2-methylpropan-2-ol, 1-(butyl(2-hydroxyethyl)amino)-2-methylpropan-2-ol, 1-(ethyl(2-hydroxypropyl)amino)-2-methylpropan-2-ol, 1-(butyl(2-hydroxypropyl)amino)-2-methylpropan-2-ol oder Mischungen davon umfasst oder daraus besteht, vorzugsweise 1-((2-hydroxyethyl)(methyl)amino)-2-methylpropan-2-ol, 1-(ethyl(2-hydroxyethyl)amino)-2-methylpropan-2-ol sowie 1-(butyl(2-hydroxyethyl)amino)-2-methylpropan-2-ol oder Mischungen davon, wobei es bevorzugt ist, wenn die Verbindung der allgemeinen Formel (III) und die Verbindung der allgemeinen Formel (VI) identisch sind. Die Verbindungen der allgemeinen Formel (III) und (VI) sind über übliche Synthesewege zugänglich. Beispielsweise sind im Falle der Alkanolamine diese beispielsweise dadurch zugänglich, dass entsprechende geminal mit den jeweiligen Resten ($R_1$, $R_2$, $R_3$, $R_4$ beziehungsweise $R_8$, $R_9$, $R_{10}$, $R_{11}$) substituierten Epoxide nach dem Fachmann bekannten Verfahren mit NH-funktionellen Verbindungen der allgemeinen Formel $H_2NR_5$ beziehungsweise $H_2NR_{12}$ konsekutiv, optional mit Isolation der NH-funktionellen Zwischenstufe der Formeln $R_5N(H)CH_2C(R_1,R_2)OH$ bzw. $R_{12}N(H)CH_2C(R_8,R_9)OH$, umgesetzt werden.

Erfindungsgemäß geeignete Zinn-enthaltende Verbindungen sind im Allgemeinen Zinn(IV)-enthaltende Verbindungen. In einer weiteren Ausführungsform des erfindungsgemäßen Verfahrens können auch Sn(II)-Verbindungen eingesetzt werden. In diesem Fall schließt sich eine oxidative Behandlung des erhaltenen Sn(II)-Komplexes an. Geeignete Verfahren dazu sind dem Fachmann an sich bekannt. Besonderes bevorzugt ist die Zinn-enthaltende Verbindung ausgewählt aus der Gruppe, umfassend oder bestehend aus Zinntetrachlorid, Zinntetrabromid, Zinntetra-alkoxid, insbesondere Zinntetra-tert-butoxid, oder Mischungen davon. Ganz besonders bevorzugt wird erfindungsgemäß Zinntetra-tert.-butoxid oder Zinntetrachlorid eingesetzt. Überdies ist es bevorzugt, dass das Stoffmengenverhältnis von elementaren Zinn oder Zinn-enthaltender Verbindung zu der Summe der Verbindungen mit der allgemeinen Formel (III) und (VI) von 1:1 bis 1:4 beträgt, bevorzugt von 1:1 bis 1:2,1.

Auch durch Verwendung von elementaren Zinn (Zinnpulver) lassen sich Verbindung mit der allgemeinen Formel (II) , insbesondere Zinn(IV)-Alkoxide, herstellen. Die Herstellung von Zinn(IV)-Alkoxide ausgehend von elementaren Zinn ist beispielsweise in DE 10 2010 012 237 A1 beschrieben.

Es ist bevorzugt, dass die Verbindungen mit der allgemeinen Formel (III) und (VI) in einem entsprechenden Reaktor (beispielsweise Rührreaktoren mit entsprechenden Vorrichtungen für die Zugabe von Reaktionskomponenten etc.), gegebenenfalls in einem Lösungsmittel, bei einer geeigneten Temperatur bereitgestellt beziehungsweise vorgelegt werden. Geeignete Lösungsmittel sind beispielsweise ausgewählt aus der Gruppe bestehend aus Alkoholen, bevorzugt Methanol, Ethanol, Propanol, insbesondere iso-Propanol, oder Mischungen davon, Ethern, bevorzugt Diethylether, Tetrahydrofuran, tert-Butyl-methyl-ether oder Mischungen davon, halogenierten Lösungsmitteln, bevorzugt Dichlormethan, Chlorform oder Mischungen davon, aromatischen Lösungsmitteln, bevorzugt Toluol, und Mischungen davon. Das erfindungsgemäßen Verfahrens erfolgt bevorzugt im Temperaturbereich zwischen -30 bis +150 °C, besonders bevorzugt -10 bis 100 °C, ganz besonders bevorzugt bei -10°C bis Zimmertemperatur. Ferner ist es bevorzugt, wenn das erfindungsgemäßes Verfahren unter inerter Atmosphäre, beispielsweise unter Stickstoff, durchgeführt. Zusätzlich zu den Verbindungen mit der allgemeinen Formel (III) und (VI) können gegebenenfalls weitere Komponenten vorgelegt werden. Diese sind beispielsweise ausgewählt aus Hilfsbasen, z.B. Alkoholate, und Mischungen enthaltend diese.

Besonders bevorzugt sind die Verbindungen mit der allgemeinen Formel (III) und (VI) identisch und werden mit einer Zinn-enthaltenden Verbindung umgesetzt, um den Katalysator der allgemeinen Formel (II) zu erhalten.

In einer besonders bevorzugten Ausführungsform des erfindungsgemäßen Verfahrens wird die mindestens eine Zinn-enthaltende Verbindung in einem entsprechenden Reaktor vorgelegt und die Verbindung der allgemeinen Formel (III) sowie die Verbindung der allgemeinen Formel (VI) in verdünnter Form hinzugegeben.

Die erhaltene Reaktionslösung kann nach dem Fachmann bekannten Methoden aufgearbeitet werden, beispielsweise mittels Filtration, destillative Abtrennung des Lösungsmittels, Kristallisation etc.

## Formulierung zur Herstellung von Polyisocyanat-Polyadditionsprodukten

Die Erfindung betrifft auch eine Formulierung zur Herstellung von Polyisocyanat-Polyadditionsprodukten, umfassend oder bestehend aus den folgenden Komponenten:

a) mindestens ein, gegebenenfalls substituiertes und/oder Heteroatom-aufweisendes, aliphatisches, (cyclo)aliphatisches oder aromatisches Polyisocyanat;
b) mindestens eine erfindungsgemäße Verbindung als Katalysator;
c) gegebenenfalls weitere von b) verschiedene Katalysatoren;
d) gegebenenfalls Hilfs- und/oder Zusatzstoffe,

wobei das Verhältnis des Gewichts des Zinns aus Komponente b) und des Gewichts der Komponente a) vorzugsweise höchstens 1000 ppm beträgt, wenn die Komponente a) ein aliphatisches und/oder (cyclo)aliphatisches Polyisocyanat ist und höchstens 50 ppm beträgt, wenn die Komponente a) ein aromatisches Polyisocyanat ist.
Die Formulierung enthält vorzugsweise

- 5 bis 80 Gew.-% der Komponente a);
- 0,0001 bis 2,0 Gew.-% der Komponente b);
- gegebenenfalls 0,01 bis 2,0 Gew.-% der Komponente c);
- gegebenenfalls 5 bis 50 Gew.-% der Komponente d);

bezogen auf das Gesamtgewicht der Formulierung.

## Verfahren zur Herstellung von Polyisocyanat-Polyadditionsprodukten

Die erfindungsgemäßen Verbindungen können zur Herstellung von Polyisocyanat-Polyadditionsprodukten eingesetzt werden. Gegenstand der vorliegenden Erfindung ist daher ein Verfahren zur Herstellung von Polyisocyanat-Polyadditionsprodukten durch Umsetzung einer Zusammensetzung:
umfassend oder bestehend aus mindestens einer Formulierung nach Anspruch 16 oder 17 und mindestens einer NCO reaktiven Verbindung, wobei die Umsetzung bevorzugt bei einer Isocyanat-Kennzahl von 80 bis 150 erfolgt
oder
umfassend oder bestehend aus den folgenden Komponenten:

A) mindestens ein, gegebenenfalls substituiertes und/oder Heteroatom-aufweisendes, aliphatisches, (cyclo)aliphatisches oder aromatisches Polyisocyanat;
B) mindestens eine NCO reaktive Verbindung;
C) mindestens eine erfindungsgemäße Verbindung als Katalysator;
D) gegebenenfalls weitere von C) verschiedene Katalysatoren;
E) gegebenenfalls Hilfs- und/oder Zusatzstoffe,

wobei das Verhältnis des Gewichts des Zinns aus Komponente C) und des Gewichts der Komponente A) vorzugsweise höchstens 1000 ppm beträgt, wenn die Komponente A) ein aliphatisches und/oder (cyclo)aliphatisches Polyisocyanat ist und höchstens 50 ppm beträgt, wenn die Komponente A) ein aromatisches Polyisocyanat ist.
Vorzugsweise enthält die Zusammensetzung

- 5 bis 80 Gew.-% der Komponente A);
- 5 bis 80 Gew.-% der Komponente B);
- 0,0001 bis 2,0 Gew.-% der Komponente C);
- gegebenenfalls 0,01 bis 2,0 Gew.-% der Komponente D);
- gegebenenfalls 5 bis 50 Gew.-% der Komponente E);

bezogen auf das Gesamtgewicht der Zusammensetzung und/oder die Umsetzung erfolgt bei einer Isocyanat-Kennzahl von 80 bis 150.
Durch das vorgenannte Verfahren wird/ist folglich ein Polyisocyanat-Polyadditionsprodukt erhalten/erhältlich.
Unter der Isocyanat-Kennzahl (auch Kennzahl, NCO/OH-Index oder Isocyanat-Index genannt) wird der Quotient aus der tatsächlich eingesetzten Stoffmenge [mol] an Isocyanat-Gruppen und der tatsächlich eingesetzten Stoffmenge [mol] an Isocyanat-reaktiven Gruppen, multipliziert mit 100, verstanden. Mit anderen Worten gibt die Kennzahl das prozentuale Verhältnis der tatsächlich eingesetzten Isocyanat-Menge zur stöchiometrischen, d.h. für die Umsetzung

der OH-Äquivalente berechnete Isocyanat-Menge an. Eine äquivalente Menge an NCO-Gruppen und NCO-reaktiven H-Atomen entspricht dabei einem NCO/OH-Index von 100.

$$\text{Kennzahl} = [(\text{mol Isocyanat-Gruppen}) / (\text{mol Isocyanat-reaktive Gruppen})] * 100$$

Bevorzugt sind die Polyisocyanat-Polyadditionsprodukte Polyurethane. Die einzelnen Komponenten des erfindungsgemäßen Polyisocyanat-Polyadditionsproduktes, insbesondere Polyurethane, werden im Folgenden detailliert beschrieben.

Die für die Herstellung von Polyisocyanat-Polyadditionsprodukten und/oder die Formulierung geeigneten, gegebenenfalls substituierten und/oder Heteroatom-aufweisenden, aliphatischen, (cyclo)aliphatischen oder aromatischen Polyisocyanate a) beziehungsweise A) (im weiteren Verlauf auch Polyisocyanatkomponente genannt) sind die dem Fachmann an sich bekannten organischen Polyisocyanate mit vorzugsweise mindestens zwei Isocyanatgruppen pro Molekül sowie Gemische davon. Beispiele für derartige Polyisocyanate sind Di- oder Triisocyanate, beispielsweise Butandiisocyanat, Pentandiisocyanat (Pentamethylendiisocyanat, PDI), Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) ($H_{12}$MDI), 3,5,5-Trimethyl-1-isocyanato-3-isocyanatomethylcyclohexan (Isophorondiisocyanat, IPDI), 1,3- sowie 1,4-Bis(isocyanatomethyl)-cyclohexan ($H_6$XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktureinheiten. Ganz bevorzugt werden Polyisocyanate auf Basis aliphatischer und cycloaliphatischer Diisocyanate eingesetzt.

Die Polyisocyanatkomponente a) und/oder A) kann in einem geeigneten Lösungsmittel vorliegen. Geeignete Lösungsmittel sind solche, die eine ausreichende Löslichkeit der Polyisocyanatkomponente aufweisen und frei von gegenüber Isocyanaten reaktiven Gruppen sind. Beispiele für solche Lösungsmittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA) und Mischungen davon.

Die Isocyanatkomponente kann darüber hinaus übliche Hilfs- und Zusatzmittel, beispielsweise Rheologieverbesserer (zum Beispiel Ethylencarbonat, Propylencarbonat, dibasische Ester, Zitronensäureester), Stabilisatoren (zum Beispiel Broenstedt- und Lewis-Säuren, wie etwa Salzsäure, Phosphorsäure, Benzoylchlorid, Organomineralsäuren wie Dibutylphosphat, weiterhin Adipinsäure, Äpfelsäure, Bernsteinsäure, Traubensäure oder Zitronensäure), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalysatoren (zum Beispiel Trialkylamine, Diazabicyclooctan, Zinndioctoat, Dibutylzinndilaurat, N-Alkylmorpholin, Blei-, Zink-, Zinn-, Calcium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Polyurethan/Polyharnstoff einbaufähige Farbstoffe (die also über Zerewitinoff-aktive Wasserstoffatome verfügen) und/oder Farbpigmente enthalten.

Als NCO-reaktive Verbindungen B) können bevorzugt alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole.

Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMCVerfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungs-produkte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt

werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydro-phthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, beispielsweise Ethylenglykol, Diethylenglykol, Neopentylglykol, Hexandiol, Butandiol, Propylenglykol, Glycerin, Trimethylolpropan, 1,4-Hydroxymethyl cyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, beispielsweise Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, beispielsweise Azoisobutyronitril (AIBN), oder aus der Gruppe der Peroxide, beispielsweise Di-tert.-butylperoxid.

Bevorzugt handelt es sich bei Komponente B) um höhermolekulare Polyhydroxyverbindungen, beispielsweise mit einem Molekulargewicht von 500 bis 10.000 g/mol, bevorzugt 1.000 bis 10.000 g/mol.

Die Komponente B) kann in einem geeigneten Lösungsmittel vorliegen. Geeignete Lösungsmittel sind solche, die eine ausreichende Löslichkeit der Komponente aufweisen. Beispiele für solche Lösungsmittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA) und Mischungen davon. Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), aber auch niedermolekulare Diamine, wie zum Beispiel Polyasparaginsäureester, sein.

Um das erfindungsgemäße Polyisocyanat-Polyadditionsprodukt und/oder die erfindungsgemäße Formulierung zu erhalten, wird als Komponente b) beziehungsweise C) mindestens eine erfindungsgemäße Verbindung als Katalysator eingesetzt.

Das bezüglich des erfindungsgemäßen Katalysators, insbesondere zu bevorzugten Ausführungsformen, Gesagte gilt hier entsprechend. Der erfindungsgemäße Katalysator kann über die NCO-reaktive Verbindung (Polyol), in einem Lösungsmittel gelöst und/oder im Polyisocyanat vorgelöst der Reaktionsmischung zugegeben werden.

Die erfindungsgemäßen Polyisocyanat-Polyadditionsprodukte oder die erfindungsgemäße Formulierung werden des Weiteren erhalten unter optionaler Verwendung der Komponente D) beziehungsweise c), weiteren von C) beziehungsweise b) verschiedenen Katalysatoren und/oder Aktivatoren, insbesondere Säuren, Amine, sterisch gehinderte Phenole, Phospite etc.. Diese sind dem Fachmann an sich bekannt und beispielsweise in der WO 2014/048879 A1 beschrieben. Des Weiteren kann der erfindungsgemäße Katalysator mit weiteren aus dem Stand der Technik bekannten Katalysatoren/Aktivatoren kombiniert werden, beispielsweise können Titan-, Zirkonium-, Bismut-, Zinn(II)- und/oder Eisenhaltige Katalysatoren eingesetzt werden wie sie beispielsweise in WO 2005/058996 beschrieben werden. Möglich ist auch eine Zugabe von Aminen oder Amidinen. Des Weiteren können bei der Polyisocyanat-Polyadditionsreaktion auch saure Verbindungen, beispielsweise 2-Ethylhexansäure oder Alkohole, zur Reaktionssteuerung zugegeben werden.

Die erfindungsgemäßen Polyisocyanat-Polyadditionsprodukte und/oder die erfindungsgemäße Formulierung werden des Weiteren erhalten unter optionaler Verwendung der Komponente E) beziehungsweise d) Füllstoffe, Pigmente, Additive, Verdicker, Entschäumer und/oder andere Hilfs- und Zusatzstoffe. Insbesondere als Komponente E) / d) geeignete Stoffe sind ausgewählt aus der Gruppe bestehend aus üblichen Rheologieverbesserern, Stabilisatoren, UV-Schutzmitteln, Hydrolyseschutzmittel, Emulgatoren, Füllstoffen, gegebenenfalls einbaufähigen Farbstoffen, d.h. solche Farbstoffe, die über Zerewitinoff-aktive Wasserstoffatome verfügen, Farbpigmente und Mischungen davon. Bevorzugte Hilfs- und Zusatzmittel sind Treibmittel, Füllstoffe, Kreide, Ruß oder Zeolithe, Flammschutzmittel, Farbpasten, Wasser, Mikrobenschutzmittel, Fließverbesserer, Thixotropiermittel, Oberflächenmodifizierungsmittel und Verzögerer bei der Herstellung der Polyisocyanat- Polyadditionsprodukte. Weitere Hilfs- und Zusatzstoffe umfassen Entschäumer, Emulgatoren, Schaumstabilisatoren und Zellregler. Eine Übersicht ist in G. Oertel, Polyurethane Handbook, 2nd Edition, Carl Hanser Verlag, München, 1994, Kap. 3.4., enthalten.

## Beschichtungsmittel

Die erfindungsgemäßen Polyisocyanat-Polyadditionsprodukte können in verschiedensten Anwendungen zum Einsatz kommen. Insbesondere ist ein Beschichtungsmittel zur Beschichtung eines Substrats, umfassend oder bestehend aus mindestens einem erfindungsgemäßen Polyisocyanat-Polyadditionsprodukt, wobei das Substrat bevorzugt ein Kunststoffteil, ein Metallteil oder ein Formkörper aus Holz ist, Gegenstand der vorliegenden Erfindung.

Das erfindungsgemäße System aus den oben genannten Komponenten kann im Allgemeinen durch jedes dem Fachmann bekannte Verfahren auf das zu beschichtende Substrat aufgebracht werden, beispielsweise in Lösung oder aus der Schmelze sowie bei Pulverlacken in fester Form mit Methoden wie Streichen, Rollen, Gießen, Spritzen, Tauchen, Wirbelschicht-verfahren oder durch elektrostatische Sprühverfahren. Als Substrate eigenen sich beispielsweise Werkstoffe wie Metalle, Holz, Kunststoffe oder Keramiken.

## Ausführungsformen:

Die vorliegende Erfindung betrifft insbesondere die folgenden Ausführungsformen:
Nach einer ersten Ausführungsform betrifft die Erfindung eine Verbindung, insbesondere einen Katalysator zur Herstellung von Polyisocyanat-Polyadditionsprodukten, mit der allgemeinen Formel (I) oder (II),

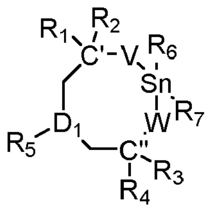

(I)

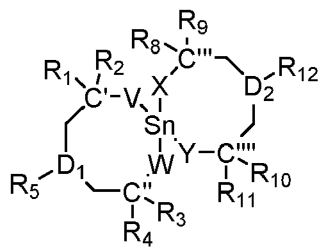

(II)

wobei

$R_1$, $R_2$, $R_3$, $R_4$, $R_8$, $R_9$, $R_{10}$ und $R_{11}$ unabhängig voneinander für Wasserstoff oder für, gegebenenfalls substituierte und/oder Heteroatom-aufweisende, aliphatische, (cyclo)aliphatische oder aromatische Reste;

$R_5$ und $R_{12}$ unabhängig voneinander für, gegebenenfalls substituierte und/oder Heteroatom-aufweisende, aliphatische, (cyclo)aliphatische oder aromatische Reste;

$R_6$ und $R_7$ unabhängig voneinander für -OH, -SH, $-OR_{13}$, Halogene, $-OC(=O)R_{14}$, $-SR_{15}$, - $OC(=S)R_{16}$, $-OS(=O)_2OR_{17}$, $-OS(=O)_2R_{18}$ oder $-NR_{19}R_{20}$, wobei $R_{13}$ bis $R_{20}$ unabhängig voneinander für, gegebenenfalls substituierte und/oder Heteroatom-aufweisende, aliphatische, (cyclo)aliphatische oder aromatische Reste stehen;

V, W, X und Y unabhängig voneinander für Sauerstoff, Schwefel, -OC(=O)-, -OC(=S)-, - SC(=O)-, -SC(=S)-, $-OS(=O)_O-$, $-OS(=O)_2-$ oder $-N(R_{21})-$, wobei $R_{21}$ für, gegebenenfalls substituierte und/oder Heteroatom-aufweisende, aliphatische, (cyclo)aliphatische oder aromatische Reste steht;

$D_1$ und $D_2$ unabhängig voneinander für Sauerstoff-, Schwefel- oder Stickstoff;

steht, dadurch gekennzeichnet, dass in Formel (I) mindestens einer der Reste $R_1$, $R_2$, $R_3$ oder $R_4$ Wasserstoff und mindestens einer dieser Reste kein Wasserstoff ist, wobei die Kohlenstoffatome C' und C" nicht dieselben Reste tragen und in Formel (II) mindestens einer der Reste $R_1$, $R_2$, $R_3$, $R_4$, $R_8$, $R_9$, $R_{10}$ oder $R_{11}$ ein Wasserstoff und mindestens einer dieser Reste kein Wasserstoff ist, wobei die Kohlenstoffatome C′ und C″ und/oder C‴ und C″″ nicht dieselben Reste tragen.

Nach einer zweiten Ausführungsform betrifft die Erfindung eine Verbindung mit der allgemeinen Formel (I) oder (II) zur Verwendung als Katalysator bei der Herstellung von Polyisocyanat-Polyadditionsprodukten,

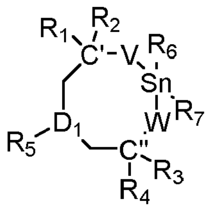

(I)

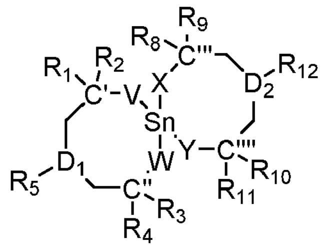

(II)

wobei

$R_1$, $R_2$, $R_3$, $R_4$, $R_8$, $R_9$, $R_{10}$ und $R_{11}$ unabhängig voneinander für Wasserstoff oder für, gegebenenfalls substituierte und/oder Heteroatom-aufweisende, aliphatische, (cyclo)aliphatische oder aromatische Reste;

$R_5$ und $R_{12}$ unabhängig voneinander für, gegebenenfalls substituierte und/oder Heteroatom-aufweisende, aliphatische, (cyclo)aliphatische oder aromatische Reste;

$R_6$ und $R_7$ unabhängig voneinander für -OH, -SH, -$OR_{13}$, Halogene, -OC(=O)$R_{14}$, -$SR_{15}$, - OC(=S)$R_{16}$, -OS(=O)$_2$O$R_{17}$, -OS(=O)$_2R_{18}$ oder -N$R_{19}R_{20}$, wobei $R_{13}$ bis $R_{20}$ unabhängig voneinander für, gegebenenfalls substituierte und/oder Heteroatom-aufweisende, aliphatische, (cyclo)aliphatische oder aromatische Reste stehen;

V, W, X und Y unabhängig voneinander für Sauerstoff, Schwefel, -OC(=O)-, -OC(=S)-, - SC(=O)-, -SC(=S)-, -OS(=O)$_O$-, -OS(=O)$_2$- oder -N($R_{21}$)-, wobei $R_{21}$ für, gegebenenfalls substituierte und/oder Heteroatom-aufweisende, aliphatische, (cyclo)aliphatische oder aromatische Reste steht;

$D_1$ und $D_2$ unabhängig voneinander für Sauerstoff-, Schwefel- oder Stickstoff;

steht, dadurch gekennzeichnet, dass in Formel (I) mindestens einer der Reste $R_1$, $R_2$, $R_3$ oder $R_4$ Wasserstoff und mindestens einer dieser Reste kein Wasserstoff ist, wobei die Kohlenstoffatome C' und C" nicht dieselben Reste tragen und in Formel (II) mindestens einer der Reste $R_1$, $R_2$, $R_3$, $R_4$, $R_8$, $R_9$, $R_{10}$ oder $R_{11}$ ein Wasserstoff und mindestens einer dieser Reste kein Wasserstoff ist, wobei die Kohlenstoffatome C′ und C″ und/oder C‴ und C″″ nicht dieselben Reste tragen.

Nach einer dritten Ausführungsform betrifft die Erfindung eine Verbindung nach Ausführungsform 1 oder 2, dadurch gekennzeichnet, dass der mindestens eine Rest $R_1$, $R_2$, $R_3$ oder $R_4$ in Formel (I), der kein Wasserstoff ist und der mindestens eine Rest $R_1$, $R_2$, $R_3$, $R_4$, $R_8$, $R_9$, $R_{10}$ oder $R_{11}$ in Formel (II), der kein Wasserstoff ist, aliphatisch ist, vorzugsweise ein Methyl-, Ethyl-, Propyl-, Butyl, Hexyl, Octyl oder Perfluoralkyl-Rest.

Nach einer vierten Ausführungsform betrifft die Erfindung eine Verbindung nach einer der vorstehenden Ausführungsformen, dadurch gekennzeichnet, dass $R_5$ und/oder $R_{12}$ ein Methyl-, Ethyl-, Propyl-, Butyl-, Pentyl- oder Hexyl-Rest ist, vorzugsweise ein Methyl- oder Ethyl-Rest.

Nach einer fünften Ausführungsform betrifft die Erfindung eine Verbindung nach einer der vorstehenden Ausführungsformen, dadurch gekennzeichnet, dass V, W, X und Y für Sauerstoff und/oder $D_1$ und $D_2$ für Stickstoff steht.

Nach einer sechsten Ausführungsform betrifft die Erfindung eine Verbindung nach einer der vorstehenden Ausführungsformen, dadurch gekennzeichnet, dass $R_6$ und $R_7$ identisch sind.

Nach einer siebten Ausführungsform betrifft die Erfindung eine Verbindung nach einer der vorstehenden Ausführungsformen, dadurch gekennzeichnet, dass die Verbindung ausgewählt ist aus der Gruppe, umfassend oder bestehend aus

- 2,2-dichloro-4,6-dimethyl-1,3,6,2-dioxazastannocan, 2,2-dibromo-4,6-dimethyl-1,3,6,2-dioxazastannocan, 2,2-dimethoxy-4,6-dimethyl-1,3,6,2-dioxazastannocan, 4,6-dimethyl-1,3,6,2-dioxazastannocan-2,2-diyl dibenzoat, 6-ethyl-4-methyl-1,3,6,2-dioxazastannocan-2,2-diyl dibenzoat, 6-butyl-4-methyl-1,3,6,2-dioxazastannocan-2,2-diyl dibenzoat, 2,4,12-trimethyl-1,7,9,15-tetraoxa-4,12-diaza-8-stannaspiro [7.7]pentadekan, 2,2,4,12-tetramethyl-1,7,9,15-tetraoxa-4,12-diaza-8-stannaspiro [7.7]pentadekan, 2,4,10,12-tetramethyl-1,7,9,15-tetraoxa-4,12-diaza-8-stannaspiro[7.7]pentadekan, 2,2,4,10,12-pentamethyl-1,7,9,15-tetraoxa-4,12-diaza-8-stannaspiro[7.7]pentadekan, 2,2,4,10,10,12-hexamethyl-1,7,9,15-tetraoxa-4,12-diaza-8-stannaspiro[7.7]pentadekan, 2,2,4,6,10,10,12-heptamethyl-1,7,9,15-tetraoxa-4,12-diaza-8-stannaspiro[7.7]pentadekan, 2,2,4,6,6,10,10,12-octamethyl-1,7,9,15-tetraoxa-4,12-diaza-8-stannaspiro[7.7]pentadekan, 2,2,4,6,6,10,10,12,14-nonamethyl-1,7,9,15-tetraoxa-4,12-diaza-8-stannaspiro[7.7]pentadekan, 4,12-diethyl-2-methyl-1,7,9,15-tetraoxa-4,12-diaza-8-stannaspiro[7.7]pentadekan, 4,12-diethyl-2,2-dimethyl-1,7,9,15-tetraoxa-4,12-diaza-8-stannaspiro[7.7]pentadekan, 4,12-diethyl-2,10-dimethyl-1,7,9,15-tetraoxa-4,12-diaza-8-stannaspiro[7.7]pentadekan, 4,12-diethyl-2,2,10-trimethyl-1,7,9,15-tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-diethyl-2,2,6,10,10-pentamethyl-1,7,9,15-tetraoxa-4,12-diaza-8-stannaspiro[7.7] pentadekan, 4,12-diethyl-2,2,6,6,10,10-hexamethyl-1,7,9,15-tetraoxa-4,12-diaza-8-stannaspiro[7.7]pentadekan, 4,12-diethyl-2,2,6,6,10,10,14-heptamethyl-1,7,9,15-tetraoxa-4,12-diaza-8-stannaspiro[7.7]pentadekan, 4,12-dibutyl-2-methyl-1,7,9,15-tetraoxa-4,12-diaza-8-stannaspiro[7.7]pentadekan, 4,12-dibutyl-2,2-dimethyl-1,7,9,15-tetraoxa-4,12-diaza-8-stannaspiro[7.7]pentadekan, 4,12-dibutyl-2,10-dimethyl-1,7,9,15-tetraoxa-4,12-diaza-8-stannaspiro[7.7]pentadekan, 4,12-dibutyl-2,2,10-trimethyl-1,7,9,15-tetraoxa-4,12-diaza-8-stannaspiro[7.7]pentadekan, 4,12-dibutyl-2,2,10,10-tetramethyl-1,7,9,15-tetraoxa-4,12-diaza-8-stannaspiro[7.7]pentadekan, 4,12-dibutyl-2,2,6,10,10-pentamethyl-1,7,9,15-tetraoxa-4,12-diaza-8-stannaspiro[7.7]pentadekan, 4,12-dibutyl-2,2,6,6,10,10-hexamethyl-1,7,9,15-tetraoxa-4,12-diaza-8-stannaspiro[7.7]pentadekan, 4,12-dibutyl-2,2,6,6,10,10,14-heptamethyl-1,7,9,15-tetraoxa-4,12-diaza-8-stannaspiro[7.7]pentadekan,4,12-dibutyl-2-(trifluoromethyl)-1,7,9,15-tetraoxa-4,12-diaza-8-stannaspiro[7.7]pentadekan, 4,12-dibutyl-2,10-bis(trifluoromethyl)-1,7,9,15-tetraoxa-4,12-diaza-8-stannaspiro[7.7]pentadekan oder Mischungen davon,

- bevorzugt 2,4,12-trimethyl-1,7,9,15-tetraoxa-4,12-diaza-8-stannaspiro[7.7]pentadekan, 2,2,4,12-tetramethyl-1,7,9,15-tetraoxa-4,12-diaza-8-stannaspiro[7.7]pentadekan, 2,4,10,12-tetramethyl-1,7,9,15 -tetraoxa-4,12-diaza-8-stannaspiro [7.7]pentadekan, 2,2,4,10,12-pentainethyl-1,7,9,15-tetraoxa-4,12-diaza-8-stannaspiro[7.7]pentadekan, 2,2,4,10,10,12-hexamethyl-1,7,9,15-tetraoxa-4,12-diaza-8-stannaspiro[7.7]pentadekan, 2,2,4,6,10,10,12-heptamethyl-1,7,9,15-tetraoxa-4,12-diaza-8-stannaspiro[7.7]pentadekan, 2,2,4,6,6,10,10,12-octamethyl-1,7,9,15-tetraoxa-4,12-diaza-8-stannaspiro[7.7]pentadekan, 2,2,4,6,6,10,10,12,14-nonamethyl-1,7,9,15-tetraoxa-4,12-diaza-8-stannaspiro[7.7]pentadekan, 4,12-diethyl-2-methyl-1,7,9,15-tetraoxa-4,12-diaza-8-stannaspiro[7.7]pentadekan, 4,12-diethyl-2,2-dimethyl-1,7,9,15-tetraoxa-4,12-diaza-8-stannaspiro[7.7]pentadekan, 4,12-diethyl-2,10-dimethyl-1,7,9,15-tetraoxa-4,12-diaza-8-stannaspiro[7.7]pentadekan, 4,12-diethyl-2,2,10-trimethyl-1,7,9,15-tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-diethyl-2,2,6,10,10-pentamethyl-1,7,9,15-tetraoxa-4,12-diaza-8-stannaspiro[7.7] pentadekan, 4,12-diethyl-2,2,6,6,10,10-hexamethyl-1,7,9,15-tetraoxa-4,12-diaza-8-stannaspiro[7.7]pentadekan, 4,12-diethyl-2,2,6,6,10,10,14-heptamethyl-1,7,9,15-tetraoxa-4,12-diaza-8-stannaspiro[7.7]pentadekan, 4,12-dibutyl-2-methyl-1,7,9,15-tetraoxa-4,12-diaza-8-stannaspiro[7.7]pentadekan, 4,12-dibutyl-2,2-dimethyl-1,7,9,15-tetraoxa-4,12-diaza-8-stannaspiro[7.7]pentadekan, 4,12-dibutyl-2,10-dimethyl-1,7,9,15-tetraoxa-4,12-diaza-8-stannaspiro[7.7]pentadekan, 4,12-dibutyl-2,2,10-trimethyl-1,7,9,15-tetraoxa-4,12-diaza-8-stannaspiro[7.7]pentadekan, 4,12-dibutyl-2,2,10,10-tetramethyl-1,7,9,15-tetraoxa-4,12-diaza-8-stannaspiro [7.7]pentadekan, 4,12-dibutyl-2,2,6,10,10-pentamethyl-1,7,9,15-tetraoxa-4,12-diaza-8-stannaspiro[7.7]pentadekan, 4,12-dibutyl-2,2,6,6,10,10-hexamethyl-1,7,9,15-tetraoxa-4,12-diaza-8-stannaspiro[7.7]pentadekan, 4,12-dibutyl-2,2,6,6,10,10,14-heptamethyl-1,7,9,15-tetraoxa-4,12-diaza-8-stannaspiro[7.7]pentadekan oder Mischungen davon,

- besonders bevorzugt 2,2,4,10,10,12-hexamethyl-1,7,9,15-tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-dibutyl-2,2,10,10-tetramethyl-1,7,9,15-tetraoxa-4,12-diaza-8-stannaspiro[7.7]pentadekan oder Mischungen davon.

Nach einer achten Ausführungsform betrifft die Erfindung ein Verfahren zur Herstellung einer Verbindung mit der allgemeinen Formel (I) nach einer der Ausführungsformen 1 bis 7 durch Umsetzung entweder

- einer Zinn-enthaltenden Verbindung des Typs $R_6R_7SnZ_2$; mit

- einer Verbindung der allgemeinen Formel (III);

$$HV\text{-}C'(R_1;R_2)\text{-}CH_2\text{-}D_1(R_5)\text{-}CH_2\text{-}C''(R_3;R_4)\text{-}WH \qquad (III)$$

oder

- einer Zinn-enthaltenden Verbindung des Typs $SnZ_4$; mit
- einer Verbindung der allgemeinen Formel (III); und

$$HV\text{-}C'(R_1;R_2)\text{-}CH_2\text{-}D_1(R_5)\text{-}CH_2\text{-}C''(R_3;R_4)\text{-}WH \qquad (III)$$

- anschließend mit Verbindungen der allgemeinen Formeln (IV) und (V);

$R_6$-A (IV) $R_7$-A (V)

wobei

$R_1$, $R_2$, $R_3$, $R_4$ unabhängig voneinander für Wasserstoff oder für, gegebenenfalls substituierte und/oder Heteroatom-aufweisende, aliphatische, (cyclo)aliphatische oder aromatische Reste;

$R_5$ unabhängig voneinander für, gegebenenfalls substituierte und/oder Heteroatom-aufweisende, aliphatische, (cyclo)aliphatische oder aromatische Reste stehen.

$R_6$ und $R_7$ unabhängig voneinander für -OH, -SH, -$OR_{13}$, Halogene, -OC(=O)$R_{14}$, -$SR_{15}$, - OC(=S)$R_{16}$, -OS(=O)$_2$O$R_{17}$, -OS(=O)$_2$$R_{18}$ oder -N$R_{19}$$R_{20}$, wobei $R_{13}$ bis $R_{20}$ unabhängig voneinander für, gegebenenfalls substituierte und/oder Heteroatom-aufweisende, aliphatische, (cyclo)aliphatische oder aromatische Reste stehen;

V, und W unabhängig voneinander für Sauerstoff, Schwefel, -OC(=O)-, -OC(=S)-, -SC(=O)-, -SC(=S)-, -OS(=O)$_O$-, -OS(=O)$_2$- oder -N($R_{21}$)-, wobei $R_{21}$ für, gegebenenfalls substituierte und/oder Heteroatom-aufweisende, aliphatische, (cyclo)aliphatische oder aromatische Reste steht;

$D_1$ für Sauerstoff-, Schwefel- oder Stickstoff;

A für Abgangsgruppen, bevorzugt -OH, -SH, N($R_{22}$)H- oder Halogene, wobei $R_{22}$ für, gegebenenfalls substituierte und/oder Heteroatom-aufweisende, aliphatische, (cyclo)aliphatische oder aromatische Reste steht;

Z für Halogene, Alkoxide oder Mischungen davon;

steht, dadurch gekennzeichnet, dass mindestens einer der Reste $R_1$, $R_2$, $R_3$ oder $R_4$ ein Wasserstoff und mindestens einer dieser Reste kein Wasserstoff ist, wobei die Kohlenstoffatome C' und C" nicht dieselben Reste tragen.

Nach einer neunten Ausführungsform betrifft die Erfindung ein Verfahren nach Ausführungsform 8, dadurch gekennzeichnet, dass

- die Verbindung der allgemeinen Formel (III) 2,2'-(methylazanediyl)bis(ethan-1-ol), 2,2'-(ethylazanediyl)bis(ethan-1-ol), 2,2'-(butylazanediyl)bis(ethan-1-ol), 1-((2-hydroxyethyl)(methyl)amino)propan-2-ol, 1-(ethyl(2-hydroxyethyl)amino)propan-2-ol, 1-(butyl(2-hydroxyethyl)amino)propan-2-ol, 1,1'-(methylazanediyl)bis(propan-2-ol), 1,1'-(ethylazanediyl)bis(propan-2-ol), 1,1'-(butylazanediyl)bis(propan-2-ol), 1-((2-hydroxyethyl)(methyl)amino)-2-methylpropan-2-ol, 1-(ethyl(2-hydroxyethyl)amino)-2-methylpropan-2-ol, 1-(butyl(2-hydroxyethyl)amino)-2-methylpropan-2-ol, , 1-(ethyl(2-hydroxypropyl)amino)-2-methylpropan-2-ol, 1-(butyl(2-hydroxypropyl)amino)-2-methylpropan-2-ol oder Mischungen davon, vorzugsweise 1-((2-hydroxyethyl)(methyl)amino)-2-methylpropan-2-ol, 1-(ethyl(2-hydroxyethyl)amino)-2-methylpropan-2-ol, 1-(butyl(2-hydroxyethyl)amino)-2-methylpropan-2-ol oder Mischungen davon; und/oder
- die Verbindung der allgemeinen Formel (IV) und/oder der allgemeinen Formel (V) Halogen, Halogenide, Alkoxide, Carboxylate, Peroxide, Disulfide oder Mischungen davon;

umfasst oder daraus besteht.

Nach einer zehnten Ausführungsform betrifft die Erfindung ein Verfahren nach Ausführungsform 8 oder 9, dadurch gekennzeichnet, dass die Zinn-enthaltenden Verbindung des Typs $SnZ_4$ aus der Gruppe ausgewählt ist, umfassend oder bestehend aus Zinntetrachlorid, Zinntetrabromid, Zinntetra-tert-alkoxid, insbesondere Zinntetra-tert-butoxid, oder Mischungen davon.

Nach einer elften Ausführungsform betrifft die Erfindung ein Verfahren nach einer der Ausführungsformen 8 bis 10, dadurch gekennzeichnet, dass das Stoffmengenverhältnis von Zinn-enthaltender Verbindung zu der Summe der Verbindungen mit der allgemeinen Formel (III), (IV) und (V) von 1:1 bis 1:4 beträgt, bevorzugt von 1:1 bis 1:2,1.

Nach einer zwölften Ausführungsform betrifft die Erfindung ein Verfahren zur Herstellung einer Verbindung mit der allgemeinen Formel (II) nach einer der Ausführungsformen 1 bis 7 durch Umsetzung von elementaren Zinn oder einer Zinn-enthaltenden Verbindung mit

- einer Verbindung mit der allgemeinen Formel (III); und

$$HV\text{-}C'(R_1;R_2)\text{-}CH_2\text{-}D_1(R_5)\text{-}CH_2\text{-}C''(R_3;R_4)\text{-}WH \qquad (III)$$

- einer Verbindung mit der allgemeinen Formel (IV);

$$HX\text{-}C'''(R_8;R_9)\text{-}CH_2\text{-}D_2(R_{12})\text{-}CH_2\text{-}C''''(R_{10}:R_{11})\text{-}YH \qquad (VI);$$

wobei

$R_1$, $R_2$, $R_3$, $R_4$, $R_8$, $R_9$, $R_{10}$ und $R_{11}$ unabhängig voneinander für Wasserstoff oder für, gegebenenfalls substituierte und/oder Heteroatom-aufweisende, aliphatische, (cyclo)aliphatische oder aromatische Reste;

$R_5$ und $R_{12}$ unabhängig voneinander für, gegebenenfalls substituierte und/oder Heteroatom-aufweisende, aliphatische, (cyclo)aliphatische oder aromatische Reste stehen.

V, W, X und Y unabhängig voneinander für Sauerstoff, Schwefel, -OC(=O)-, -OC(=S)-, - SC(=O)-, -SC(=S)-, $-OS(=O)_O-$, $-OS(=O)_2-$ oder $-N(R_{21})-$, wobei $R_{21}$ für, gegebenenfalls substituierte und/oder Heteroatom-aufweisende, aliphatische, (cyclo)aliphatische oder aromatische Reste steht;

$D_1$ und $D_2$ unabhängig voneinander für Sauerstoff-, Schwefel- oder Stickstoff;

steht, dadurch gekennzeichnet, dass mindestens einer der Reste $R_1$, $R_2$, $R_3$, $R_4$, $R_8$, $R_9$, $R_{10}$ oder $R_{11}$ ein Wasserstoff und mindestens einer dieser Reste kein Wasserstoff ist, wobei die Kohlenstoffatome C′ und C″ und/oder C‴ und C″″ nicht dieselben Reste tragen.

Nach einer dreizehnten Ausführungsform betrifft die Erfindung ein Verfahren nach Ausführungsform 12, dadurch gekennzeichnet, dass die Verbindung der allgemeinen Formel (III) und/oder die Verbindung der allgemeinen Formel (VI) 2,2'-(methylazanediyl)bis(ethan-1-ol), 2,2'-(ethylazanediyl)bis(ethan-1-ol), 2,2'-(butylazanediyl)bis(ethan-1-ol), 1-((2-hydroxyethyl)(methyl)amino)propan-2-ol, 1-(ethyl(2-hydroxyethyl)amino)propan-2-ol, 1-(butyl(2-hydroxyethyl)amino)propan-2-ol, 1,1'-(methylazanediyl)bis(propan-2-ol), 1,1'-(ethylazanediyl)bis(propan-2-ol), 1,1'-(butylazanediyl)bis(propan-2-ol), 1-((2-hydroxyethyl)(methyl)amino)-2-methylpropan-2-ol, 1-(ethyl(2-hydroxyethyl)amino)-2-methylpropan-2-ol, 1-(butyl(2-hydroxyethyl)amino)-2-methylpropan-2-ol, 1-(ethyl(2-hydroxypropyl)amino)-2-methylpropan-2-ol, 1-(butyl(2-hydroxypropyl)amino)-2-methylpropan-2-ol oder Mischungen davon umfasst oder daraus besteht, vorzugsweise 1-((2-hydroxyethyl)(methyl)amino)-2-methylpropan-2-ol, 1-(ethyl(2-hydroxyethyl)amino)-2-methylpropan-2-ol sowie 1-(butyl(2-hydroxyethyl)amino)-2-methylpropan-2-ol oder Mischungen davon, wobei es bevorzugt ist, wenn die Verbindung der allgemeinen Formel (III) und die Verbindung der allgemeinen Formel (VI) identisch sind.

Nach einer vierzehnten Ausführungsform betrifft die Erfindung ein Verfahren nach Ausführungsform 12 oder 13, dadurch gekennzeichnet, dass die Zinn-enthaltende Verbindung aus der Gruppe ausgewählt ist, umfassend oder bestehend aus Zinntetrachlorid, Zinntetrabromid, Zinntetra-alkoxid, insbesondere Zinntetra-tert-butoxid, oder Mischungen davon.

Nach einer fünfzehnten Ausführungsform betrifft die Erfindung ein Verfahren nach einer der Ausführungsformen 12 oder 14, dadurch gekennzeichnet, dass das Stoffmengenverhältnis von elementaren Zinn oder Zinn-enthaltender Verbindung zu der Summe der Verbindungen mit der allgemeinen Formel (III) und (VI) von 1:1 bis 1:4 beträgt, bevorzugt von 1:1 bis 1:2,1.

Nach einer sechszehnten Ausführungsform betrifft die Erfindung die Verwendung einer Verbindung nach einer der Ausführungsformen 1 bis 7 als Katalysator, vorzugsweise als thermolatenter Katalysator zur Herstellung von Polyisocyanat-Polyadditionsprodukten, insbesondere Polyurethanen, bevorzugt Polyurethan-Schaumstoffen, Polyurethan-Beschichtungen, Polyurethan-Lacken oder Polyurethan-Klebstoffen.

Nach einer siebzehnten Ausführungsform betrifft die Erfindung eine Formulierung zur Herstellung von Polyisocyanat-Polyadditionsprodukten, umfassend oder bestehend aus den folgenden Komponenten:

a) mindestens ein, gegebenenfalls substituiertes und/oder Heteroatom-aufweisendes, aliphatisches, (cyclo)aliphatisches oder aromatisches Polyisocyanat;

b) mindestens eine Verbindung nach einer der Ausführungsformen 1 bis 7 als Katalysator;

c) gegebenenfalls weitere von b) verschiedene Katalysatoren;

d) gegebenenfalls Hilfs- und/oder Zusatzstoffe

wobei das Verhältnis des Gewichts des Zinns aus Komponente b) und des Gewichts der Komponente a) vorzugsweise höchstens 1000 ppm beträgt, wenn die Komponente a) ein aliphatisches und/oder (cyclo)aliphatisches Polyisocyanat ist und höchstens 50 ppm beträgt, wenn die Komponente a) ein aromatisches Polyisocyanat ist.
Nach einer achtzehnten Ausführungsform betrifft die Erfindung eine Formulierung nach Ausführungsform 17, dadurch gekennzeichnet, dass die Formulierung

- 5 bis 80 Gew.-% der Komponente a);
- 0,0001 bis 2,0 Gew.-% der Komponente b);
- gegebenenfalls 0,01 bis 2,0 Gew.-% der Komponente c);
- gegebenenfalls 5 bis 50 Gew.-% der Komponente d);

enthält, bezogen auf das Gesamtgewicht der Formulierung.
Nach einer neunzehnten Ausführungsform betrifft die Erfindung ein Verfahren zur Herstellung von Polyisocyanat-Polyadditionsprodukten durch Umsetzung einer Zusammensetzung:

umfassend oder bestehend aus mindestens einer Formulierung nach Ausführungsform 17 oder 18 und mindestens einer NCO reaktiven Verbindung, wobei die Umsetzung bevorzugt
bei einer Isocyanat-Kennzahl von 80 bis 150 erfolgt
oder
umfassend oder bestehend aus den folgenden Komponenten:

A) mindestens ein, gegebenenfalls substituiertes und/oder Heteroatom-aufweisendes, aliphatisches, (cyclo)aliphatisches oder aromatisches Polyisocyanat;
B) mindestens eine NCO reaktive Verbindung;
C) mindestens eine Verbindung nach einer der Ausführungsformen 1 bis 7 als Katalysator;
D) gegebenenfalls weitere von C) verschiedene Katalysatoren;
E) gegebenenfalls Hilfs- und/oder Zusatzstoffe,

wobei das Verhältnis des Gewichts des Zinns aus Komponente C) und des Gewichts der Komponente A) vorzugsweise höchstens 1000 ppm beträgt, wenn die Komponente A) ein aliphatisches und/oder (cyclo)aliphatisches Polyisocyanat ist und höchstens 50 ppm beträgt, wenn die Komponente A) ein aromatisches Polyisocyanat ist.

Nach einer zwanzigsten Ausführungsform betrifft die Erfindung ein Verfahren nach Ausführungsform 19, dadurch gekennzeichnet, dass die Zusammensetzung

- 5 bis 80 Gew.-% der Komponente A);
- 5 bis 80 Gew.-% der Komponente B);
- 0,0001 bis 2,0 Gew.-% der Komponente C);
- gegebenenfalls 0,01 bis 2,0 Gew.-% der Komponente D);
- gegebenenfalls 5 bis 50 Gew.-% der Komponente E);

enthält, bezogen auf das Gesamtgewicht der Zusammensetzung und/oder, dass die Umsetzung bei einer Isocyanat-Kennzahl von 80 bis 150 erfolgt.
Nach einer einundzwanzigsten Ausführungsform betrifft die Erfindung ein Polyisocyanat-Polyadditionsprodukt, erhalten oder erhältlich durch ein Verfahren nach Ausführungsform 19 oder 20.
Nach einer zweiundzwanzigsten Ausführungsform betrifft die Erfindung ein Beschichtungsmittel zur Beschichtung eines Substrats, umfassend oder bestehend aus mindestens einem Polyisocyanat-Polyadditionsprodukt nach Ausführungsform 21, wobei das Substrat bevorzugt ein Kunststoffteil, ein Metallteil oder ein Formkörper aus Holz ist.

**Beispiele und Vergleichsbeispiele:**

Die vorliegende Erfindung wird im Folgenden anhand von Beispielen erörtert, ist jedoch nicht auf diese beschränkt.

In den Beispielen sind alle Prozentangaben, soweit nicht anders vermerkt, als Gewichtsprozent zu verstehen. Alle Reaktionen wurden unter einer trockenen Stickstoffatmosphäre durchgeführt. Die Herstellung der in Tabelle 1 aufgeführten erfindungsgemäßen und Vergleichs-Katalysatoren, die Synthese der zu ihrer Herstellung verwendeten Liganden sowie die Bereitung der verwendeten, thermolatent katalysierten Polyisocyanathärterrezepturen ist ausführlich in WO 2021/249887 A1 beschrieben.

Die Katalysatormenge wurde zur besseren Vergleichbarkeit der Aktivität der erfindungsgemäß einzusetzenden Katalysatoren und der Katalysatoren aus den Vergleichsbeispielen als mg Sn je kg Polyisocyanathärter (ppm) angegeben, wobei als Polyisocyanathärter das Handelsprodukt Desmodur ultra N 3300 der Fa. Covestro AG, Leverkusen, D, NCO-Gehalt 21,8%, und als Modellverbindung für die Isocyanat-reaktive Komponente (‚Poly'ol) genau ein Äquivalent, bezogen auf die freien Isocyanatgruppen des Polyisocyanathärters, Triethylenglykolmonomethylether (Produkt der Fa. Aldrich, Taufkirchen, D) eingesetzt wurden. Durch Zugabe von 10% (bezogen auf Desmodur ultra N 3300) n-Butylacetat wurde sichergestellt, über den gesamten Reaktionsverlauf hinreichend niedrigviskose Proben ziehen zu können, die eine genaue Erfassung des NCO-Gehaltes mittels Titration gemäß DIN 53 185 gestatten. Der zu Beginn der Reaktion ohne jedwede NCO-OH-Reaktion berechnete NCO-Gehalt beläuft sich dabei auf 11,1% und wird hier als Startwert auf 100% normiert. Alle titrierten Werte werden in Tabelle 2 hierauf normiert.

Vergleichsversuch 1 bei konstant 30°C zeigt die extrem langsame Abnahme des NCO-Gehaltes der Mischung im unkatalysierten Fall (Tabelle 2, Versuch 1). Um einen Vergleich der Beschleunigung der Reaktion bei 50°C Reaktionstemperatur (im realen Lacksystem als ‚Aushärtungstemperatur' bezeichnet) zu ermöglichen, wurde darüber hinaus eine Versuchsreihe bei anfangs konstant 30°C (2h) und anschließend 50°C zunächst ebenfalls unkatalysiert durchgeführt (Tabelle 2, Versuch 2). Sämtliche Vergleichsversuche 3 bis 7 sowie die erfindungsgemäßen Beispiele (ab 8) wurden nach demselben Regime gefahren: anfangs 2 h 30°C zur Beurteilung der Thermolatenz und anschließend 50°C zur Beurteilung der Reaktivität bei "Aushärtungstemperatur'.

**Tabelle 1** Übersicht über die verwendeten Katalysatoren, 1 -3 Vergleich, ab 4 erfindungsgemäß

| **Katalysator** | IUPAC-Name[1)] |
|---|---|
| **1** | 4,12-Dibutyl-1,7,9,15-tetraoxa-4,12-diaza-8-stannaspiro[7.7]pentadekan |
| **2** | 4,12-Dibutyl-2,6,10,14-tetramethyl-1,7,9,15-tetraoxa-4,12-diaza-8-stannaspiro [7.7]pentadekan |
| **3** | 4,12-Dibutyl-2,2,6,6,10,10,14,14-octamethyl-1,7,9,15-tetraoxa-4,12-diaza-8-stannaspiro[7.7]pentadekan |
| **4** | 4,12-Dibutyl-2,2,10,10-tetramethyl-1,7,9,15-tetraoxa-4,12-diaza-8-stannaspiro [7.7]pentadekan |
| **5** | 4,12-Dibutyl-2,2,10-trimethyl-1,7,9,15-tetraoxa-4,12-diaza-8-stannaspiro[7.7] pentadekan |
| **6** | 4,12-Dibutyl-2,10-dimethyl-1,7,9,15-tetraoxa-4,12-diaza-8-stannaspiro[7.7] pentadekan |
| **7** | 4,12-Dibutyl-2,2-dimethyl-1,7,9,15-tetraoxa-4,12-diaza-8-stannaspiro[7.7] pentadekan |
| **8** | 4,12-Dibutyl-2-methyl-1,7,9,15-tetraoxa-4,12-diaza-8-stannaspiro[7.7]pentadekan |
| **9** | 4,12-Dimethyl-2,2,10,10-tetramethyl-1,7,9,15-tetraoxa-4,12-diaza-8-stannaspiro [7.7]pentadekan |
| [1)] die IUPAC-Namen wurden mit dem Programm ChemDraw Professional Version 20.1.1125 generiert und händisch ins Deutsche übersetzt. | |

**Tabelle 2** Übersicht über die durchgeführten Versuche

| (Beispiel 1 - 7:Vergleichsbeispiele, **Beispiele 8 -15: erfindungsgemäß)** | | | | | | | | | | | | |
|---|---|---|---|---|---|---|---|---|---|---|---|---|
| **Bsp. -Nr.** | **Kat** | **Kat.-konz. 1)** | **NCO-Gehalt der Mischung [% rel.] nach [hh:mm]** auf den berechneten Startwert = 100% normiert | | | | | | | | | |
| | | | **00:30** | **1:00** | **1:30** | **2:00** | **2:10** | **2:20** | **2:30** | **3:00** | **4:00** | **6:00** |
| 1 | ohne | 0[2] | 100 | 99,9 | 99,8 | 99,6 | 99,6 | 99,5 | 99,5 | 99,4 | 99,4 | 99,2 |
| 2 | ohne | 0[3] | 100 | 100 | 99,7 | 99,6 | 99,5 | 98 | 97,5 | 96,2 | 92,3 | 85,3 |
| 3 | Kat. 1 | 20[3] | 100 | 99,9 | 99,8 | 99,6 | 96,6 | 94,1 | 93,5 | 87,2 | 82,4 | 72,1 |
| 4 | Kat. 1 | 60[3] | 100 | 98,2 | 97,4 | 97,2 | 91,8 | 90,5 | 89 | 82,6 | 56,9 | 37,2 |
| 5 | Kat. 2 | 20[3] | 100 | 99,8 | 99,9 | 99,8 | 96,7 | 94,8 | 93,8 | 87 | 74,4 | 56,8 |
| 6 | Kat. 2 | 60[3] | 99,8 | 97,9 | 96,2 | 95,9 | 88,8 | 86,4 | 85,9 | 82,6 | 56,9 | 22,3 |
| 7 | Kat. 3 | 60[3] | 99,7 | 99,4 | 99,2 | 98,8 | 97,1 | 95,2 | 94,6 | 87,2 | 82,6 | 73,4 |
| **8** | **Kat. 4** | **20[3]** | **99,6** | **98,5** | **97,2** | **96,8** | **87,4** | **85,1** | **81,1** | **77,7** | **54,1** | **18,9** |
| **9** | **Kat. 5** | **20[3]** | **99,7** | **97,5** | **96,3** | **95,4** | **88,4** | **86,6** | **82,1** | **79,2** | **57,2** | **28,6** |
| **10** | **Kat. 6** | **20[3]** | **99,7** | **97,8** | **96,2** | **95,7** | **88,8** | **86,4** | **85,2** | **81,2** | **59,1** | **32,1** |
| **11** | **Kat. 7** | **20[3]** | **99,4** | **97,9** | **96,3** | **95,9** | **89,2** | **86,4** | **86,2** | **82** | **62,3** | **33,3** |
| **12** | **Kat. 8** | **20[3]** | **99,5** | **98** | **96,5** | **95,9** | **94,8** | **93,2** | **88,8** | **83,3** | **65,5** | **48,9** |
| **13** | **Kat. 8** | **60[3]** | **99,8** | **97,9** | **96,2** | **95,9** | **88,8** | **85,8** | **82** | **76,4** | **50,1** | **18,9** |
| **15** | **Kat. 9** | **20[3]** | **99,5** | **98,4** | **97,0** | **96,6** | **87,2** | **84,9** | **80,0** | **76,2** | **48,1** | **16,7** |
| [1] Sn [ppm] auf Polyisocyanathärter [2] konstant 30°C [3] erste 2 h 30°C, dann 50°C - s. Text | | | | | | | | | | | | |

Wie man aus den in Tabelle 2 dargestellten Ergebnissen erkennt, sind sämtliche Systeme - unabhängig davon, ob erfindungsgemäß oder nicht - bei 30°C hinreichend unreaktiv um als thermolatent gelten zu können. Allerdings entfalten die erfindungsgemäßen Systeme mit "unsymmetrischer" Ligandenumgebung des Zentralatoms bei 50°C eine z.T. deutlich höhere Aktivität, als es bei den Vergleichssysteme auf Basis der Katalysatoren 1-3 zu beobachten ist. Es überrascht in Anbetracht der sehr niedrigen Reaktivität der Verbindung 3 und der moderaten Reaktivität der Verbindung 1, dass Verbindung 4, die sozusagen eine "Kombination" der Ligandenumgebungen von 1 und 3 aufweist, deutlich reaktiver als beide Vergleichskatalysatoren ist. Der Fachmann hätte hier eine Reaktivität erwartet, die zwischen der von 1 und 3 liegt.

Beispiele 16 - 21 Messreihe zur Beurteilung der Farbstabilität

Die Katalysatoren 1, 2 und 4 gemäß Tabelle 1 wurden einerseits in Hexamethylendiisocyanat gelöst, wobei die Katalysatorkonzentration so gewählt wurde, dass jeweils einheitlich 0,1% Zinn enthaltende Mischungen resultierten (Beispiele 16 - 18) und andererseits als 10%ige Lösungen in n-Butylacetat (BA) in der Wärme (50°C) mit dem Iminooxadiazindiongruppen enthaltenden Polyisocyanat Desmodur N 3900 der Fa. Covestro in der Menge abgemischt, dass einheitlich 750 ppm Zinn auf lösemittelfreies Desmodur N 3900 resultieren, die im Anschluss durch Zugabe weiteren Butylacetats auf 90% Festkörper verdünnt wurden (Beispiele 19 - 21).

Die Messung der Hazen-Farbzahl erfolgte spektrofotometrisch nach DIN EN ISO 6271-2:2005-03 mit einem LICO 400-Spektrofotometer der Fa. Lange, DE.

Diese Mischungen wurden bei 50°C unter Stickstoff gelagert und die Farbentwicklung verfolgt, vgl. Tabelle 3.

**Tabelle 3** Übersicht über die durchgeführten Versuche zur Farbentwicklung von HDI (0,1% Sn) und Desmodur N 3900 (750 ppm Sn auf Polyisocyanat)

| (Beispiele 16 und 17 sowie 19 und 20: Vergleichsbeispiele, **Beispiele 18 und 21: erfindungsgemäß)** | | | | | | |
|---|---|---|---|---|---|---|
| **Beispiel** | 16 | 17 | **18** | 19 | 20 | **21** |
| **Katalysator** | 1 | 2 | **4** | 1 | 2 | **4** |
| Tage bei 50°C | Hazen-Farbzahl [Apha] | | | | | |
| 0 | 9 | 18 | **5** | 32 | 34 | **35** |
| 4 | 128 | 236 | **13** | 32 | 31 | **19** |
| 5 | 158 | 339 | **19** | 33 | 54 | **20** |
| 6 | 169 | 385 | **19** | 37 | 119 | **20** |
| 7 | 185 | 453 | **26** | 45 | 184 | **19** |
| 11 | 231 | 666 | **43** | 68 | 396 | **24** |
| 13 | 246 | 746 | **61** | 80 | 461 | **22** |
| 14 | 256 | 772 | **76** | 88 | 485 | **22** |
| 15 | 265 | 818 | **89** | 98 | 527 | **22** |
| 19 | 310 | 974 | **122** | 145 | 653 | **28** |
| 21 | | | | 169 | 707 | **29** |
| 25 | | | | 169 | 707 | **29** |
| 27 | | | | 227 | 773 | **46** |
| 28 | | | | 277 | 825 | **59** |

Wie man erkennt, ist das erfindungsgemäße System auf Basis des Katalysators 4 den strukturell ähnlichen Vergleichssystemen (Katalysator 2 ist lediglich ein Stellungsisomer zu 4!) auch hinsichtlich der Farbstabilität der Isocyanataddukte deutlich überlegen.

## Patentansprüche

1. Verbindung mit der allgemeinen Formel (I) oder (II) zur Verwendung als Katalysator bei der Herstellung von Polyisocyanat-Polyadditionsprodukten,,

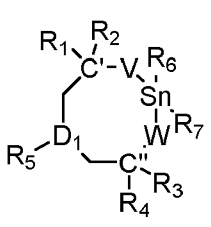

(I)

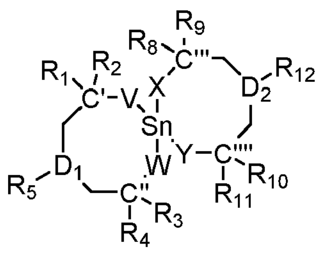

(II)

wobei

$R_1$, $R_2$, $R_3$, $R_4$, $R_8$, $R_9$, $R_{10}$ und $R_{11}$ unabhängig voneinander für Wasserstoff oder für, gegebenenfalls substituierte und/oder Heteroatom-aufweisende, aliphatische, (cyclo)aliphatische oder aromatische Reste;

$R_5$ und $R_{12}$ unabhängig voneinander für, gegebenenfalls substituierte und/oder Heteroatom-aufweisende, aliphatische, (cyclo)aliphatische oder aromatische Reste;

$R_6$ und $R_7$ unabhängig voneinander für -OH, -SH, -$OR_{13}$, Halogene, -OC(=O)$R_{14}$, -$SR_{15}$, - OC(=S)$R_{16}$, -OS(=O)$_2$O$R_{17}$, -OS(=O)$_2$$R_{18}$ oder -N$R_{19}$$R_{20}$, wobei $R_{13}$ bis $R_{20}$ unabhängig voneinander für, gegebenenfalls substituierte und/oder Heteroatom-aufweisende, aliphatische, (cyclo)aliphatische oder aromatische Reste stehen;

V, W, X und Y unabhängig voneinander für Sauerstoff, Schwefel, -OC(=O)-, -OC(=S)-, - SC(=O)-, -SC(=S)-, -OS(=O)$_2$O-, -OS(=O)$_2$- oder -N($R_{21}$)-, wobei $R_{21}$ für, gegebenenfalls substituierte und/oder Heteroatom-aufweisende, aliphatische, (cyclo)aliphatische oder aromatische Reste steht;

$D_1$ und $D_2$ unabhängig voneinander für Sauerstoff-, Schwefel- oder Stickstoff;

steht,
**dadurch gekennzeichnet, dass**

in Formel (I) mindestens einer der Reste $R_1$, $R_2$, $R_3$ oder $R_4$ Wasserstoff und mindestens einer dieser Reste kein Wasserstoff ist, wobei die Kohlenstoffatome C' und C" nicht dieselben Reste tragen und

in Formel (II) mindestens einer der Reste $R_1$, $R_2$, $R_3$, $R_4$, $R_8$, $R_9$, $R_{10}$ oder $R_{11}$ ein Wasserstoff und mindestens einer dieser Reste kein Wasserstoff ist, wobei die Kohlenstoffatome C' und C" und/oder C‴ und C"" nicht dieselben Reste tragen.

2. Verbindung nach Anspruch 1, **dadurch gekennzeichnet, dass** der mindestens eine Rest $R_1$, $R_2$, $R_3$ oder $R_4$ in Formel (I), der kein Wasserstoff ist und der mindestens eine Rest $R_1$, $R_2$, $R_3$, $R_4$, $R_8$, $R_9$, $R_{10}$ oder $R_{11}$ in Formel (II), der kein Wasserstoff ist, aliphatisch ist, vorzugsweise ein Methyl-, Ethyl-, Propyl-, Butyl, Hexyl, Octyl oder Perfluoralkyl-Rest.

3. Verbindung nach Anspruch 1 oder 2, **dadurch gekennzeichnet, dass** $R_5$ und/oder $R_{12}$ ein Methyl-, Ethyl-, Propyl-, Butyl-, Pentyl- oder Hexyl-Rest ist, vorzugsweise ein Methyl- oder Ethyl-Rest.

4. Verbindung nach einem der vorstehenden Ansprüche, **dadurch gekennzeichnet, dass** V, W, X und Y für Sauerstoff und/oder $D_1$ und $D_2$ für Stickstoff steht.

5. Verbindung nach einem der vorstehenden Ansprüche, **dadurch gekennzeichnet, dass** $R_6$ und $R_7$ identisch sind.

6. Verbindung nach einem der vorstehenden Ansprüche, **dadurch gekennzeichnet, dass** die Verbindung ausgewählt ist aus der Gruppe, umfassend oder bestehend aus

   - 2,2-dichloro-4,6-dimethyl-1,3,6,2-dioxazastannocan, 2,2-dibromo-4,6-dimethyl-1,3,6,2-dioxazastannocan, 2,2-dimethoxy-4,6-dimethyl-1,3,6,2-dioxazastannocan, 4,6-dimethyl-1,3,6,2-dioxazastannocan-2,2-diyl dibenzoat, 6-ethyl-4-methyl-1,3,6,2-dioxazastannocan-2,2-diyl dibenzoat, 6-butyl-4-methyl-1,3,6,2-dioxazastannocan-2,2-diyl dibenzoat, 2,4,12-trimethyl-1,7,9,15-tetraoxa-4,12-diaza-8-stannaspiro[7.7]pentadekan, 2,2,4,12-tetramethyl-1,7,9,15-tetraoxa-4,12-diaza-8-stannaspiro[7.7]pentadekan, 2,4,10,12-tetramethyl-1,7,9,15-tetraoxa-4,12-diaza-8-stannaspiro[7.7]pentadekan, 2,2,4,10,12-pentamethyl-1,7,9,15-tetraoxa-4,12-diaza-8-stannaspiro[7.7]pentadekan, 2,2,4,10,10,12-hexamethyl-1,7,9,15-tetraoxa-4,12-diaza-8-stannaspiro[7.7]pentadekan, 2,2,4,6,10,10,12-heptamethyl-1,7,9,15-tetraoxa-4,12-diaza-8-stannaspiro[7.7]pentadekan, 2,2,4,6,6,10,10,12-octamethyl-1,7,9,15-tetraoxa-4,12-diaza-8-stannaspiro[7.7]pentadekan, 2,2,4,6,6,10,10,12,14-nonamethyl-1,7,9,15-tetraoxa-4,12-diaza-8-stannaspiro[7.7]pentadekan, 4,12-diethyl-2-methyl-1,7,9,15-tetraoxa-4,12-diaza-8-stannaspiro[7.7]pentadekan, 4,12-diethyl-2,2-dimethyl-1,7,9,15-tetraoxa-4,12-diaza-8-stannaspiro[7.7]pentadekan, 4,12-diethyl-2,10-dimethyl-1,7,9,15-tetraoxa-4,12-diaza-8-stannaspiro[7.7]pentadekan, 4,12-diethyl-2,2,10-trimethyl-1,7,9,15-tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-diethyl-2,2,6,10,10-pentamethyl-1,7,9,15-tetraoxa-4,12-diaza-8-stannaspiro[7.7]pentadekan, 4,12-diethyl-2,2,6,6,10,10-hexamethyl-1,7,9,15-tetraoxa-4,12-diaza-8-stannaspiro[7.7]pentadekan, 4,12-diethyl-2,2,6,6,10,10,14-heptamethyl-1,7,9,15-tetraoxa-4,12-diaza-8-stannaspiro[7.7]pentadekan, 4,12-dibutyl-2-methyl-1,7,9,15-tetraoxa-4,12-diaza-8-stannaspiro[7.7]pentadekan, 4,12-dibutyl-2,2-dimethyl-1,7,9,15-tetraoxa-4,12-diaza-8-stannaspiro[7.7]pentadekan, 4,12-dibutyl-2,10-dimethyl-1,7,9,15-tetraoxa-4,12-diaza-8-stannaspiro[7.7]pentadekan, 4,12-dibutyl-2,2,10-trimethyl-1,7,9,15-tetraoxa-4,12-diaza-8-stannaspiro[7.7]pentadekan, 4,12-dibutyl-2,2,10,10-tetramethyl-1,7,9,15-tetraoxa-4,12-diaza-8-stannaspiro[7.7]pentadekan, 4,12-dibutyl-2,2,6,10,10-pentamethyl-1,7,9,15-tetraoxa-4,12-diaza-8-stannaspiro[7.7]pentadekan, 4,12-dibutyl-2,2,6,6,10,10-hexamethyl-1,7,9,15-tetraoxa-4,12-diaza-8-stannaspiro[7.7]pentadekan, 4,12-dibutyl-2,2,6,6,10,10,14-heptamethyl-1,7,9,15-tetraoxa-4,12-diaza-8-stannaspiro[7.7]pentadekan,4,12-dibutyl-2-(trifluoromethyl)-1,7,9,15-tetraoxa-4,12-diaza-8-stannaspiro[7.7]pentadekan, 4,12-dibutyl-2,10-bis(trifluoromethyl)-1,7,9,15-tetraoxa-4,12-diaza-8-stannaspiro[7.7]pentadekan oder Mischungen davon,

• bevorzugt 2,4,12-trimethyl-1,7,9,15-tetraoxa-4,12-diaza-8-stannaspiro[7.7]pentadekan, 2,2,4,12-tetramethyl-1,7,9,15-tetraoxa-4,12-diaza-8-stannaspiro[7.7]pentadekan, 2,4,10,12-tetramethyl-1,7,9,15-tetraoxa-4,12-diaza-8-stannaspiro[7.7]pentadekan, 2,2,4,10,12-pentamethyl-1,7,9,15-tetraoxa-4,12-diaza-8-stannaspiro[7.7]pentadekan, 2,2,4,10,10,12-hexamethyl-1,7,9,15-tetraoxa-4,12-diaza-8-stannaspiro[7.7]pentadekan, 2,2,4,6,10,10,12-heptamethyl-1,7,9,15-tetraoxa-4,12-diaza-8-stannaspiro[7.7]pentadekan, 2,2,4,6,6,10,10,12-octamethyl-1,7,9,15-tetraoxa-4,12-diaza-8-stannaspiro[7.7]pentadekan, 2,2,4,6,6,10,10,12,14-nonamethyl-1,7,9,15-tetraoxa-4,12-diaza-8-stannaspiro[7.7]pentadekan, 4,12-diethyl-2-methyl-1,7,9,15-tetraoxa-4,12-diaza-8-stannaspiro[7.7]pentadekan, 4,12-diethyl-2,2-dimethyl-1,7,9,15-tetraoxa-4,12-diaza-8-stannaspiro[7.7]pentadekan, 4,12-diethyl-2,10-dimethyl-1,7,9,15-tetraoxa-4,12-diaza-8-stannaspiro[7.7]pentadekan, 4,12-diethyl-2,2,10-trimethyl-1,7,9,15-tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-diethyl-2,2,6,10,10-pentamethyl-1,7,9,15-tetraoxa-4,12-diaza-8-stannaspiro[7.7]pentadekan, 4,12-diethyl-2,2,6,6,10,10-hexamethyl-1,7,9,15-tetraoxa-4,12-diaza-8-stannaspiro[7.7]pentadekan, 4,12-diethyl-2,2,6,6,10,10,14-heptamethyl-1,7,9,15-tetraoxa-4,12-diaza-8-stannaspiro[7.7]pentadekan, 4,12-dibutyl-2-methyl-1,7,9,15-tetraoxa-4,12-diaza-8-stannaspiro[7.7]pentadekan, 4,12-dibutyl-2,2-dimethyl-1,7,9,15-tetraoxa-4,12-diaza-8-stannaspiro[7.7]pentadekan, 4,12-dibutyl-2,10-dimethyl-1,7,9,15-tetraoxa-4,12-diaza-8-stannaspiro[7.7]pentadekan, 4,12-dibutyl-2,2,10-trimethyl-1,7,9,15-tetraoxa-4,12-diaza-8-stannaspiro[7.7]pentadekan, 4,12-dibutyl-2,2,10,10-tetramethyl-1,7,9,15-tetraoxa-4,12-diaza-8-stannaspiro[7.7]pentadekan, 4,12-dibutyl-2,2,6,10,10-pentamethyl-1,7,9,15-tetraoxa-4,12-diaza-8-stannaspiro[7.7]pentadekan, 4,12-dibutyl-2,2,6,6,10,10-hexamethyl-1,7,9,15-tetraoxa-4,12-diaza-8-stannaspiro[7.7]pentadekan, 4,12-dibutyl-2,2,6,6,10,10,14-heptamethyl-1,7,9,15-tetraoxa-4,12-diaza-8-stannaspiro[7.7]pentadekan oder Mischungen davon,

• besonders bevorzugt 2,2,4,10,10,12-hexamethyl-1,7,9,15-tetraoxa-4,12-diaza-8-stannaspiro[7.7]pentadekan, 4,12-diethyl-2,2,10,10-tetramethyl-1,7,9,15-tetraoxa-4,12-diaza-8-stannaspiro[7.7]pentadekan, 4,12-dibutyl-2,2,10,10-tetramethyl-1,7,9,15-tetraoxa-4,12-diaza-8-stannaspiro[7.7]pentadekan oder Mischungen davon.

**7.** Verwendung einer Verbindung nach einem der Ansprüche 1 bis 6 als Katalysator, vorzugsweise als thermolatenter Katalysator zur Herstellung von Polyisocyanat-Polyadditionsprodukten, insbesondere Polyurethanen, bevorzugt Polyurethan-Schaumstoffen, Polyurethan-Beschichtungen, Polyurethan-Lacken oder Polyurethan-Klebstoffen.

**8.** Formulierung zur Herstellung von Polyisocyanat-Polyadditionsprodukten, umfassend oder bestehend aus den folgenden Komponenten:

a) mindestens ein, gegebenenfalls substituiertes und/oder Heteroatom-aufweisendes, aliphatisches, (cyclo)aliphatisches oder aromatisches Polyisocyanat;
b) mindestens eine Verbindung nach einem der Ansprüche 1 bis 6 als Katalysator;
c) gegebenenfalls weitere von b) verschiedene Katalysatoren;
d) gegebenenfalls Hilfs- und/oder Zusatzstoffe,

wobei das Verhältnis des Gewichts des Zinns aus Komponente b) und des Gewichts der Komponente a) vorzugsweise höchstens 1000 ppm beträgt, wenn die Komponente a) ein aliphatisches und/oder (cyclo)aliphatisches Polyisocyanat ist und höchstens 50 ppm beträgt, wenn die Komponente a) ein aromatisches Polyisocyanat ist.

**9.** Formulierung nach Anspruch 8, **dadurch gekennzeichnet, dass** die Formulierung

• 5 bis 80 Gew.-% der Komponente a);
• 0,0001 bis 2,0 Gew.-% der Komponente b);
• gegebenenfalls 0,01 bis 2,0 Gew.-% der Komponente c);
• gegebenenfalls 5 bis 50 Gew.-% der Komponente d);

enthält, bezogen auf das Gesamtgewicht der Formulierung.

**10.** Verfahren zur Herstellung von Polyisocyanat-Polyadditionsprodukten durch Umsetzung einer Zusammensetzung:

umfassend oder bestehend aus mindestens einer Formulierung nach Anspruch 8 oder 9 und
mindestens einer NCO reaktiven Verbindung, wobei die Umsetzung bevorzugt bei einer Isocyanat-Kennzahl von 80 bis 150 erfolgt
oder
umfassend oder bestehend aus den folgenden Komponenten:

A) mindestens ein, gegebenenfalls substituiertes und/oder Heteroatom-aufweisendes, aliphatisches, (cyclo)aliphatisches oder aromatisches Polyisocyanat;
B) mindestens eine NCO reaktive Verbindung;
C) mindestens eine Verbindung nach einem der Ansprüche 1 bis 6 als Katalysator;
D) gegebenenfalls weitere von C) verschiedene Katalysatoren;
E) gegebenenfalls Hilfs- und/oder Zusatzstoffe,

wobei das Verhältnis des Gewichts des Zinns aus Komponente C) und des Gewichts der Komponente A) vorzugsweise höchstens 1000 ppm beträgt, wenn die Komponente A) ein aliphatisches und/oder (cyclo)aliphatisches Polyisocyanat ist und höchstens 50 ppm beträgt,
wenn die Komponente A) ein aromatisches Polyisocyanat ist.

**11.** Verfahren nach Anspruch 10, **dadurch gekennzeichnet, dass** die Zusammensetzung

- 5 bis 80 Gew.-% der Komponente A);
- 5 bis 80 Gew.-% der Komponente B);
- 0,0001 bis 2,0 Gew.-% der Komponente C);
- gegebenenfalls 0,01 bis 2,0 Gew.-% der Komponente D);
- gegebenenfalls 5 bis 50 Gew.-% der Komponente E);

enthält, bezogen auf das Gesamtgewicht der Zusammensetzung und/oder, dass die Umsetzung bei einer Isocyanat-Kennzahl von 80 bis 150 erfolgt.

**12.** Polyisocyanat-Polyadditionsprodukt, erhalten oder erhältlich durch ein Verfahren nach Anspruch 10 oder 11.

**13.** Beschichtungsmittel zur Beschichtung eines Substrats, umfassend oder bestehend aus mindestens einem Polyisocyanat-Polyadditionsprodukt nach Anspruch 12, wobei das Substrat bevorzugt ein Kunststoffteil, ein Metallteil oder ein Formkörper aus Holz ist.

Europäisches Patentamt
European Patent Office
Office européen des brevets

# EUROPÄISCHER RECHERCHENBERICHT

Nummer der Anmeldung
EP 22 15 9155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 601 398 A1 (COVESTRO DEUTSCHLAND AG [DE]) 5. Februar 2020 (2020-02-05) * Ansprüche 13,15 * ----- | 1-13 | INV. C08G18/24 C08G18/28 C08G18/79 |
| X | EP 3 502 185 A1 (COVESTRO DEUTSCHLAND AG [DE]) 26. Juni 2019 (2019-06-26) * Ansprüche 4,9 * ----- | 1-13 | |
| X | EP 3 770 198 A1 (COVESTRO INTELLECTUAL PROPERTY GMBH & CO KG [DE]) 27. Januar 2021 (2021-01-27) * Absatz [0026] * ----- | 1-13 | |
| X | US 2018/009931 A1 (MALEIKA ROBERT [DE] ET AL) 11. Januar 2018 (2018-01-11) * Absatz [0113] * ----- | 1-13 | |
| X | US 2021/315668 A1 (ACHTEN DIRK [DE] ET AL) 14. Oktober 2021 (2021-10-14) * Absätze [0081], [0082] * ----- | 1-13 | RECHERCHIERTE SACHGEBIETE (IPC) |
| X | US 2020/140707 A1 (ACHTEN DIRK [DE] ET AL) 7. Mai 2020 (2020-05-07) * Absatz [0081] * ----- | 1-13 | C08G |
| X | US 2019/135968 A1 (GRAHL MICHAEL [DE] ET AL) 9. Mai 2019 (2019-05-09) * Absätze [0075] - [0083] * ----- | 1-13 | |
| X | WO 2016/113288 A1 (COVESTRO DEUTSCHLAND AG [DE]) 21. Juli 2016 (2016-07-21) * Beispiele 1,2 * ----- | 1-13 | |

Der vorliegende Recherchenbericht wurde für alle Patentansprüche erstellt

1

| Recherchenort | Abschlußdatum der Recherche | Prüfer |
|---|---|---|
| München | 1. August 2022 | Bergmeier, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 15 9155

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-08-2022

| Im Recherchenbericht angeführtes Patentdokument | Datum der Veröffentlichung | Mitglied(er) der Patentfamilie | Datum der Veröffentlichung |
|---|---|---|---|
| EP 3601398 A1 | 05-02-2020 | CN 110461898 A | 15-11-2019 |
| | | EP 3381959 A1 | 03-10-2018 |
| | | EP 3601398 A1 | 05-02-2020 |
| | | US 2021087324 A1 | 25-03-2021 |
| | | WO 2018178025 A1 | 04-10-2018 |
| EP 3502185 A1 | 26-06-2019 | CN 111479875 A | 31-07-2020 |
| | | EP 3502185 A1 | 26-06-2019 |
| | | EP 3728472 A1 | 28-10-2020 |
| | | JP 2021507050 A | 22-02-2021 |
| | | KR 20200092986 A | 04-08-2020 |
| | | US 2020392275 A1 | 17-12-2020 |
| | | WO 2019121239 A1 | 27-06-2019 |
| EP 3770198 A1 | 27-01-2021 | CN 112300352 A | 02-02-2021 |
| | | EP 3770198 A1 | 27-01-2021 |
| | | US 2021023544 A1 | 28-01-2021 |
| US 2018009931 A1 | 11-01-2018 | CN 107108841 A | 29-08-2017 |
| | | EP 3245240 A1 | 22-11-2017 |
| | | US 2018009931 A1 | 11-01-2018 |
| | | WO 2016113295 A1 | 21-07-2016 |
| US 2021315668 A1 | 14-10-2021 | CA 3103357 A1 | 26-03-2020 |
| | | CN 112888401 A | 01-06-2021 |
| | | EP 3626201 A1 | 25-03-2020 |
| | | EP 3852675 A1 | 28-07-2021 |
| | | JP 2022502111 A | 11-01-2022 |
| | | KR 20210058821 A | 24-05-2021 |
| | | US 2021315668 A1 | 14-10-2021 |
| | | WO 2020058311 A1 | 26-03-2020 |
| US 2020140707 A1 | 07-05-2020 | CN 110799566 A | 14-02-2020 |
| | | EP 3645598 A1 | 06-05-2020 |
| | | US 2020140707 A1 | 07-05-2020 |
| | | WO 2019002540 A1 | 03-01-2019 |
| US 2019135968 A1 | 09-05-2019 | CN 109071999 A | 21-12-2018 |
| | | EP 3445827 A1 | 27-02-2019 |
| | | JP 2019518097 A | 27-06-2019 |
| | | JP 2022058534 A | 12-04-2022 |
| | | KR 20180132708 A | 12-12-2018 |
| | | US 2019135968 A1 | 09-05-2019 |
| | | WO 2017182429 A1 | 26-10-2017 |
| WO 2016113288 A1 | 21-07-2016 | CN 107438515 A | 05-12-2017 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 22 15 9155

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-08-2022

| Im Recherchenbericht angeführtes Patentdokument | Datum der Veröffentlichung | Mitglied(er) der Patentfamilie | Datum der Veröffentlichung |
|---|---|---|---|
| | | EP 3245051 A1 | 22-11-2017 |
| | | JP 6906445 B2 | 21-07-2021 |
| | | JP 2018506067 A | 01-03-2018 |
| | | KR 20170104551 A | 15-09-2017 |
| | | TW 201639694 A | 16-11-2016 |
| | | US 2017368723 A1 | 28-12-2017 |
| | | WO 2016113288 A1 | 21-07-2016 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011051247 A1
- EP 798299 B1
- EP 3337836 A1
- EP 3107948 A1
- DE 102010012237 A1
- WO 2014048879 A1
- WO 2005058996 A
- WO 2021249887 A1


### In der Beschreibung aufgeführte Nicht-Patentliteratur


- **G. OERTEL.** Polyurethane Handbook. Carl Hanser Verlag, 1994